(19) Europäisches Patentamt
European Patent Office
Office européen des brevets

(11) **EP 4 387 359 A1**

(12) **EUROPEAN PATENT APPLICATION**
published in accordance with Art. 153(4) EPC

(43) Date of publication:
**19.06.2024 Bulletin 2024/25**

(51) International Patent Classification (IPC):
**H04W 72/04** (2023.01)  **H04W 72/12** (2023.01)

(21) Application number: **22863531.4**

(22) Date of filing: **31.08.2022**

(52) Cooperative Patent Classification (CPC):
**H04L 5/14; H04W 28/02; H04W 28/10;**
**H04W 72/04; H04W 72/0446; H04W 72/0453;**
**H04W 72/12**

(86) International application number:
**PCT/CN2022/116267**

(87) International publication number:
**WO 2023/030396 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.09.2021 CN 202111033122**

(71) Applicant: **Huawei Technologies Co., Ltd.**
**Shenzhen, Guangdong 518129 (CN)**

(72) Inventors:
• **LI, Jun**
 **Shenzhen, Guangdong 518129 (CN)**
• **JIAO, Shurong**
 **Shenzhen, Guangdong 518129 (CN)**
• **HUA, Meng**
 **Shenzhen, Guangdong 518129 (CN)**

(74) Representative: **Gill Jennings & Every LLP**
 **The Broadgate Tower**
 **20 Primrose Street**
 **London EC2A 2ES (GB)**

(54) **DATA TRANSMISSION METHOD AND COMMUNICATION APPARATUS**

(57) This application provides a data transmission method and a communication apparatus. The method includes: A first device obtains a first frequency domain resource on a first time domain resource, where the first frequency domain resource is a frequency domain resource that cannot be used to transmit a TB. The first device determines a TBS based on a frequency domain resource that is in a second frequency domain resource on the first time domain resource and that does not overlap the first frequency domain resource, where the second frequency domain resource is a frequency domain resource that is indicated by DCI and that is used to transmit the TB. The first device transmits the TB on the first time domain resource and the non-overlapping frequency domain resource based on the TBS. Based on this application, a more proper TBS can be determined, to improve data transmission performance.

FIG. 6

**Description**

This application claims priority to Chinese Patent Application No. 202111033122.7, filed with the China National Intellectual Property Administration on September 3, 2021 and entitled "DATA TRANSMISSION METHOD AND COMMUNICATION APPARATUS", which is incorporated herein by reference in its entirety.

**TECHNICAL FIELD**

This application relates to the communication field, and more specifically, to a data transmission method and a communication apparatus.

**BACKGROUND**

A complementary time division duplex (complementary time division duplex, C-TDD) system is proposed to reduce a transmission delay in a time division duplex (time division duplex, TDD) system. In the C-TDD system, a frequency domain resource that may be used for uplink transmission may be configured in a downlink slot, and/or a frequency domain resource that may be used for downlink transmission may be configured in an uplink slot.

Current resource allocation manners (a resource allocation type 0 and a resource allocation type 1) are both for the TDD system or a frequency division duplex (frequency division duplex, FDD) system. If the resource allocation type 0 or the resource allocation type 1 is still used in the C-TDD system, a downlink frequency domain resource allocated to a terminal may include an uplink frequency domain resource, or an uplink frequency domain resource allocated to a terminal may include a downlink frequency domain resource. Consequently, data transmission performance is affected.

**SUMMARY**

This application provides a data transmission method, to ensure data transmission performance of a C-TDD system.

According to a first aspect, a data transmission method is provided. The method includes: A first device obtains a first frequency domain resource on a first time domain resource, where the first frequency domain resource is a frequency domain resource that cannot be used to transmit a transport block (transport block, TB); the first device determines a transport block size (transport block size, TBS) based on a frequency domain resource that is in a second frequency domain resource on the first time domain resource and that does not overlap the first frequency domain resource, where the second frequency domain resource is a frequency domain resource that is indicated by downlink control information and that is used to transmit the TB; and the first device transmits the TB on the first time domain resource and the non-overlapping frequency domain resource based on the TBS.

Based on the foregoing solution, if the first frequency domain resource cannot be used to transmit the TB on the first time domain resource, and the second frequency domain resource that is allocated by a network device to a terminal device and that is used to transmit the TB overlaps the first frequency domain resource on the first time domain resource, the terminal device and the network device determine the TBS based on the frequency domain resource that is in the second frequency domain resource on the first time domain resource and that does not overlap the first frequency domain resource, to determine a more proper TBS. Further, transmitting the TB based on the TBS may improve data transmission performance.

In a possible implementation, the first device determines the TBS based on a quantity of frequency domain resource units included in the non-overlapping frequency domain resource.

In another possible implementation, the first device determines the TBS based on a ratio of the quantity of frequency domain resource units included in the non-overlapping frequency domain resource to a quantity of frequency domain resource units included in the second frequency domain resource.

With reference to the first aspect, in some implementations of the first aspect, the first time domain resource is one of a plurality of time domain resources, and the first frequency domain resource on the first time domain resource cannot be used to transmit the TB. That the first device transmits the TB based on the TBS includes: The first device repeatedly transmits the TB on the plurality of time domain resources based on the TBS.

Based on the foregoing technical solution, when the network device allocates a plurality of time domain resources to the terminal device, the terminal device and the network device determine the TBS based on an overlapping resource of the first frequency domain resource and the second frequency domain resource on the first time domain resource in the plurality of time domain resources, to ensure that the terminal device and the network device determine a same TBS, thereby providing data transmission performance.

With reference to the first aspect, in some implementations of the first aspect, the first device is a terminal device, and the method further includes: The first device receives first indication information, where the first indication information indicates the second frequency domain resource, the first indication information includes M bits, the M bits one-to-one correspond to M resource block groups (resource block group, RBG), each of the M RBGs includes at least one frequency domain resource unit that can be used to transmit the TB, and M is a positive integer.

With reference to the first aspect, in some implementations of the first aspect, the first device is a network device, and the method further includes: The first device sends first indication information, where the first indication information indicates the second frequency domain resource, the first indication information includes M bits, the M bits one-to-one correspond to M RBGs, each of the M RBGs includes at least one frequency domain resource unit that can be used to transmit the TB, and M is a positive integer.

Based on the foregoing technical solution, if the M bits included in the first indication information correspond to the M RBGs, and each of the M RBGs includes at least one frequency domain resource unit that can be used to transmit the TB, when the current active BWP includes at least one RBG that does not include a frequency domain resource unit that can be used to transmit the TB, a quantity of bits of the first indication information can be reduced.

With reference to the first aspect, in some implementations of the first aspect, the first device is a terminal device, and the method further includes: The first device receives second indication information, where the second indication information indicates the second frequency domain resource, the second indication information includes M bits, the M bits correspond to K RBGs, at least one of the M bits corresponds to at least two first RBGs, the first RBG includes a frequency domain resource unit that can be used to transmit the TB and a frequency domain resource unit that cannot be used to transmit the TB, and M and K are positive integers.

With reference to the first aspect, in some implementations of the first aspect, the first device is a network device, and the method further includes: The first device sends second indication information, where the second indication information indicates the second frequency domain resource, the second indication information includes M bits, the M bits correspond to K RBGs, at least one of the M bits corresponds to at least two first RBGs, the first RBG includes a frequency domain resource unit that can be used to transmit the TB and a frequency domain resource unit that cannot be used to transmit the TB, and M and K are positive integers.

Based on the foregoing technical solution, if the M bits included in the second indication information correspond to the K RBGs, and at least one of the M bits corresponds to the at least two first RBGs, a quantity of bits of the second indication information can be reduced in comparison with a manner in which one bit corresponds to one RBG.

With reference to the first aspect, in some implementations of the first aspect, an RBG included in a current active bandwidth part (bandwidth part, BWP) is determined based on all resource blocks (resource block, RB) on the current active BWP.

Based on the foregoing technical solution, the N RBGs included in the current active BWP are determined based on all RBs on the current active BWP. Therefore, it can be ensured that division of the RBGs and a precoding resource block groups (precoding resource block group, PRG) remains unchanged, and data transmission performance is not affected, especially multiple-input multiple-output (multiple input multiple output, MIMO) performance is not affected.

According to a second aspect, a data transmission method is provided. The method may include: A terminal device receives downlink control information (downlink control information, DCI); the terminal device determines overheads in an RB based on the DCI; the terminal device determines a TBS based on the overheads; and the terminal device transmits the TB based on the TBS.

Based on the foregoing technical solution, the terminal device dynamically determines, based on the DCI, overheads used for calculating the TBS, and determines the TBS based on the determined overheads, to determine a more proper TBS. Further, when the TB is transmitted based on the TBS, data transmission performance may be improved.

Optionally, the overheads further include overheads configured by using a radio resource control (radio resource control, RRC) message.

According to a third aspect, a data transmission method is provided. The method may include: A network device determines overheads in an RB; the network device sends DCI, where the DCI is used to determine the overheads; the network device determines a transport block size TBS based on the overheads; and the network device transmits the TB based on the TBS.

Based on the foregoing technical solution, the network device sends the DCI to a terminal device, so that the terminal device dynamically determines, based on the DCI, overheads used for calculating the TBS, and determines the TBS based on the determined overheads, to determine a more proper TBS. Further, when the TB is transmitted based on the TBS, data transmission performance may be improved.

Optionally, the overheads further include overheads configured by using an RRC message.

According to a fourth aspect, a data transmission method is provided. The method may include: A terminal device receives third indication information, where the third indication information indicates a scale factor of a TBS in a unicast scenario; the terminal device determines the TBS based on the scale factor; and the terminal device transmits a TB based on the TBS.

Based on the foregoing technical solution, the terminal device determines the scale factor of the TBS in the unicast scenario based on the third indication information. Therefore, when an allocated second frequency domain resource used to transmit the TB and the first frequency domain resource that cannot be used to transmit the TB overlap on the first time domain resource, the TBS determined by the terminal device based on the scale factor is more appropriate, thereby improving data transmission performance.

Optionally, the third indication information is transmitted by using DCI, a media access control control element, or an RRC message.

According to a fifth aspect, a data transmission method is provided. The method may include: A network device sends third indication information, where the third indication information indicates a scale factor of a TBS in a unicast scenario; the network device determines the TBS based on the scale factor; and the network device transmits a TB based on the TBS.

Based on the foregoing technical solution, the network device sends the third indication information to the terminal device, so that the terminal device determines the scale factor of the TBS in the unicast scenario based on the third indication information. Therefore, when an allocated second frequency domain resource used to transmit the TB and the first frequency domain resource that cannot be used to transmit the TB overlap on the first time domain resource, the TBS determined by the terminal device based on the scale factor is more appropriate, thereby improving data transmission performance.

Optionally, the third indication information is transmitted by using DCI, a media access control control element, or an RRC message.

According to a sixth aspect, a data transmission method is provided, where the method may include: A terminal device receives fourth indication information, where the fourth indication information includes a first index S and a quantity L of consecutive RBs that can be used to transmit a TB, and the first index S indicates an $(S+1)^{th}$ RB in the RBs that can be used to transmit the TB in a BWP; the terminal device determines a third frequency domain resource on the BWP based on the first index S and the L, where the third frequency domain resource includes L RBs that can be used to transmit the TB, and the BWP includes an RB that can be used to transmit the TB and an RB that cannot be used to transmit the TB; and the terminal device transmits the TB on the first time domain resource and the third frequency domain resource.

Based on the foregoing technical solution, when the BWP includes the RB that can be used to transmit the TB and the RB that cannot be used to transmit the TB, the first index included in the fourth indication information indicates the RB that can be used to transmit the TB in a current active BWP, instead of all RBs on the current active BWP, so that a quantity of bits of the fourth indication information can be reduced.

With reference to the sixth aspect, in some implementations of the sixth aspect, that the terminal device determines a third frequency domain resource on the BWP based on the first index S and L includes: The terminal device determines the third frequency domain resource based on a second index S' and L, where the second index is determined based on the first index and a relationship between the first index and the second index, and the second index indicates an $(S'+1)^{th}$ RB in all the RBs included in the BWP.

With reference to the sixth aspect, in some implementations of the sixth aspect, the method further includes: The terminal device receives fifth indication information, where the fifth indication information includes the relationship between the first index and the second index.

According to a seventh aspect, a data transmission method is provided. The method may include: A network device sends fourth indication information, where the fourth indication information includes a first index S and a quantity L of consecutive RBs that can be used to transmit a TB, and the first index S indicates an $(S+1)^{th}$ RB in the RBs that can be used to transmit the TB in a BWP; and the network device transmits the TB on a first time domain resource and a third frequency domain resource.

Based on the foregoing technical solution, when the BWP includes the RB that can be used to transmit the TB and the RB that cannot be used to transmit the TB, the first index included in the fourth indication information indicates the RB that can be used to transmit the TB in a current active BWP, instead of all RBs on the current active BWP, so that a quantity of bits of the fourth indication information can be reduced.

With reference to the seventh aspect, in some implementations of the seventh aspect, the method further includes: The network device sends fifth indication information, where the fifth indication information includes a relationship between the first index and the second index.

According to an eighth aspect, a communication apparatus is provided. The communication apparatus may include modules or units configured to perform the method in any one of the first aspect or the possible implementations of the first aspect.

According to a ninth aspect, a communication apparatus is provided. The communication apparatus may include a transceiver unit and a processing unit. The transceiver unit is configured to receive DCI. The processing unit is configured to determine overheads in an RB based on the DCI. The processing unit is further configured to determine a TBS based on the overheads. The transceiver unit is further configured to transmit a TB based on the TBS.

Optionally, the overheads further include overheads configured by using an RRC message.

According to a tenth aspect, a communication apparatus is provided. The communication apparatus may include a transceiver unit and a processing unit. The processing unit is configured to determine overheads in an RB. The transceiver unit is configured to send DCI, and the DCI is used to determine the overheads. The transceiver unit is further configured to determine a transport block size TBS based on the overheads. The network device transmits a TB based on the TBS.

Optionally, the overheads further include overheads configured by using an RRC message.

According to an eleventh aspect, a communication apparatus is provided. The communication apparatus may include a transceiver unit and a processing unit. The transceiver unit is configured to receive third indication information, where the third indication information indicates a scale factor of a TBS in a unicast scenario. The processing unit is configured to determine the TBS based on the scale factor. The transceiver unit is further configured to transmit a TB based on the TBS.

Optionally, the third indication information is transmitted by using DCI, a media access control control element, or an RRC message.

According to a twelfth aspect, a communication apparatus is provided. The communication apparatus may include a transceiver unit and a processing unit. The transceiver unit is configured to send third indication information, where the third indication information indicates a scale factor of a TBS in a unicast scenario. The processing unit is configured to determine the TBS based on the scale factor. The transceiver unit is further configured to transmit a TB based on the TBS.

Optionally, the third indication information is transmitted by using DCI, a media access control control element, or an RRC message.

According to a thirteenth aspect, a communication apparatus is provided, where the communication apparatus may include a transceiver unit and a processing unit, the transceiver unit is configured to receive fourth indication information, where the fourth indication information includes a first index S and a quantity L of consecutive RBs that can be used to transmit a TB, and the first index S indicates an $(S+1)^{th}$ RB in the RBs that can be used to transmit the TB in a BWP; the processing unit is configured to determine a third frequency domain resource on the BWP based on the first index S and the L, where the third frequency domain resource includes L RBs that can be used to transmit the TB, and the BWP includes an RB that can be used to transmit the TB and an RB that cannot be used to transmit the TB; and the transceiver unit is further configured to transmit the TB on the first time domain resource and the third frequency domain resource.

With reference to the thirteenth aspect, in some implementations of the thirteenth aspect, the processing unit is specifically configured to determine the third frequency domain resource based on a second index S' and L, where the second index is determined based on the first index and a relationship between the first index and the second index, and the second index indicates an $(S'+1)^{th}$ RB in all the RBs included in the BWP.

With reference to the thirteenth aspect, in some implementations of the thirteenth aspect, the transceiver unit is further configured to receive fifth indication information, where the fifth indication information includes a relationship between the first index and the second index.

According to a fourteenth aspect, a communication apparatus is provided. The communication apparatus may include a transceiver unit, where the transceiver unit is configured to send fourth indication information, the fourth indication information includes a first index S and a quantity L of consecutive RBs that can be used to transmit a TB, and the first index S indicates an $(S+1)^{th}$ RB in the RBs that can be used to transmit the TB in a BWP; and the transceiver unit is further configured to transmit the TB on a first time domain resource and a third frequency domain resource.

With reference to the fourteenth aspect, in some implementations of the fourteenth aspect, the transceiver unit is further configured to send fifth indication information, where the fifth indication information includes a relationship between the first index and the second index.

According to a fifteenth aspect, a communication apparatus is provided. The communication apparatus may be the terminal device in the foregoing method embodiments, or may be a chip disposed in a terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixteenth aspect, a communication apparatus is provided. The communication apparatus may be the network device in the foregoing method embodiments, or a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventeenth aspect, a computer program product is provided, where the computer program product includes computer program code, and when the computer program code is run, the method performed by the terminal device in the foregoing aspects is performed.

According to an eighteenth aspect, a computer program product is provided, where the computer program product includes computer program code, and when the computer program code is run, the method performed by the network device in the foregoing aspects is performed.

According to a nineteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a twentieth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a twenty-first aspect, this application provides a computer-readable storage medium, where the computer-readable storage medium stores a computer program, and when the computer program is run, the method performed by the terminal device in the foregoing aspects is implemented.

According to a twenty-second aspect, this application provides a computer-readable storage medium, where the computer-readable storage medium stores a computer program, and when the computer program is run, the method performed by the network device in the foregoing aspects is implemented.

**BRIEF DESCRIPTION OF DRAWINGS**

FIG. 1 is a schematic diagram of a communication system to which a method according to an embodiment of this application is applicable;

FIG. 2 is a schematic diagram of a frequency domain resource indication manner;

FIG. 3 is a schematic diagram of another frequency domain resource indication manner;

FIG. 4 is a schematic diagram of a rate match resource;

FIG. 5 is a schematic diagram of frequency domain resource allocation manners in an FDD system, a TDD system, and a C-TDD system;

FIG. 6 is a schematic flowchart of a method according to an embodiment of this application;

FIG. 7 is a schematic diagram of a frequency domain resource indication manner;

FIG. 8 is a schematic diagram of a frequency domain resource indication manner;

FIG. 9 is a schematic diagram of a frequency domain resource indication manner;

FIG. 10 is a schematic diagram of a frequency domain resource indication manner in a plurality of slots;

FIG. 11 is a schematic flowchart of a method according to an embodiment of this application;

FIG. 12 is a schematic flowchart of a method according to an embodiment of this application;

FIG. 13 is a schematic flowchart of a method according to an embodiment of this application;

FIG. 14 is a schematic diagram of a frequency domain resource indication manner according to an embodiment of this application;

FIG. 15 is a schematic diagram of a frequency domain resource indication manner according to an embodiment of this application;

FIG. 16 is a schematic flowchart of a method according to an embodiment of this application;

FIG. 17 is a schematic diagram of a frequency domain resource indication manner according to an embodiment of this application;

FIG. 18 is a schematic diagram of a frequency domain resource indication manner according to an embodiment of this application;

FIG. 19 is a schematic diagram of a structure of a communication apparatus according to an embodiment of this application; and

FIG. 20 is a schematic diagram of a structure of another communication apparatus according to an embodiment of this application.

**DESCRIPTION OF EMBODIMENTS**

The following describes technical solutions of this application with reference to accompanying drawings.

The technical solutions in embodiments of this application may be applied to various communication systems, for example, a home network, a 5th generation (5th generation, 5G) system or a new radio (new radio, NR) system, a long term evolution (long term evolution, LTE) system, and a complementary time division duplex (complementary time division duplex, C-TDD) system. The technical solutions in embodiments of this application may be further applied to sidelink communication. For example, the technical solutions in embodiments of this application may be further applied to device to device (device to device, D2D) communication, machine to machine (machine to machine, M2M) communication, machine type communication (machine type communication, MTC), and communication in an internet-of-vehicles system. Communication manners in the internet of vehicles system are collectively referred to as V2X (where X represents everything). For example, V2X communication includes vehicle-to-vehicle (vehicle to vehicle, V2V) communication, vehicle-to-infrastructure (vehicle-to-infrastructure, V2I) communication, vehicle-to-pedestrian (vehicle to pedestrian, V2P) communication, or vehicle-to-network (vehicle to network, V2N) communication.

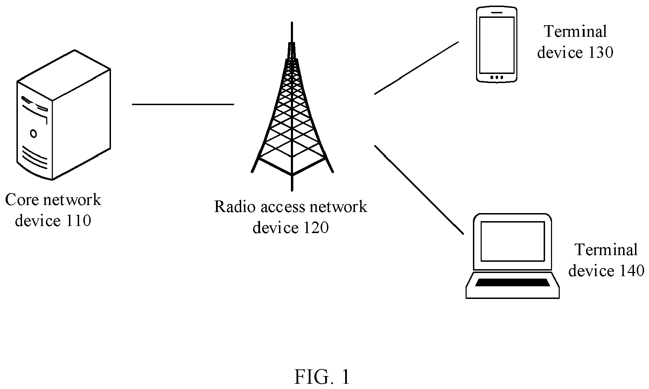

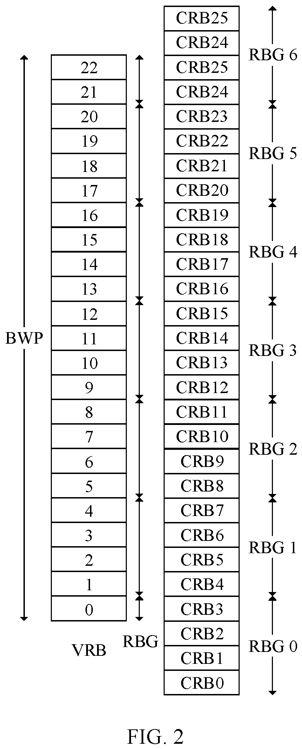

For ease of understanding embodiments of this application, a communication system used in embodiments of this application is described in detail with reference to FIG. 1 and FIG. 2.

FIG. 1 is a schematic diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 shown in FIG. 1). The terminal device is connected to the radio access network device in a wireless manner, and the radio access network device is connected to the core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device that is used by the terminal device to access the mobile communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. Alternatively, the radio access network device may be a module or a unit that completes a part of functions of a base station, for example, may be a central unit (central unit, CU) or a distributed unit (distributed unit, DU). A specific technology and a specific device form that are used by the radio access network device are not limited in embodiments of this application. In this application, the radio access network device is referred to as a network device for short. Unless otherwise specified, network devices are all radio access network devices. For example, the radio access network device 120 may be referred to as a network device 120.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. A specific technology and a specific device form that are used by the terminal device are not limited in this embodiment of this application.

The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in this embodiment of this application.

The network device and the terminal device may communicate with each other by using a licensed spectrum (licensed spectrum), may communicate with each other by using an unlicensed spectrum (unlicensed spectrum), or may communicate with each other by using both a licensed spectrum and an unlicensed spectrum. Communication between the network device and the terminal device may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used between the network device and the terminal device is not limited in this embodiment of this application.

For ease of understanding this application, the following briefly describes several terms in this application.

1. Resource block group (resource block group, RBG)

An RBG includes a group of consecutive resource blocks (resource block, RB). A quantity of RBs included in the RBG is an RBG size (size). For example, if the RBG size is 2, the RBG includes two consecutive RBs.

It should be noted that, in frequency domain, the RB may include a positive integer quantity of subcarriers, for example, 6 or 12. A definition of the RB may be further extended to a time domain. For example, the RB includes a positive integer quantity of time domain symbols in time domain. For example, the RB includes 12 subcarriers in frequency domain, and includes 7 or 14 orthogonal frequency division multiplexing (orthogonal frequency division multiplexing, OFDM) symbols in time domain.

For the terminal device, the RBG size may be determined based on an RBG configuration and a bandwidth of a bandwidth part (bandwidth part, BWP). Currently, two RBG configurations (configurations) are predefined in the NR standard. In an RBG configuration 1, candidate values of the RBG size are 2, 4, 8, and 16. In an RBG configuration 2, candidate values of the RBG size are 4, 8, and 16. A network device may indicate an RBG configuration in each BWP to the terminal device by using a higher layer signaling parameter "rbg-size".

For example, for a relationship between the RBG size, the RBG configuration, and the BWP bandwidth, refer to Table 1. The BWP bandwidth is a quantity of RBs included in the BWP.

**Table 1 Relationship between an RBG** size, **an RBG configuration, and a BWP bandwidth**

| BWP bandwidth | RBG configuration 1 | RBG configuration 2 |
| --- | --- | --- |
| 1 to 36 | 2 | 4 |
| 37 to 72 | 4 | 8 |
| 73 to 144 | 8 | 16 |
| 145 to 275 | 16 | 16 |

2. Precoding resource block group (precoding resource block group, PRG)

A PRG includes a group of consecutive RBs in frequency domain, and the consecutive RBs have same precoding.

3. Frequency domain resource information

There are two NR downlink resource allocation manners: a downlink resource allocation type (type) 0 and a downlink resource allocation type 1.

(1) Downlink resource allocation type 0

In the downlink resource allocation type 0, a bitmap (bitmap) indicates RBGs allocated to UE, and one RBG is indicated by using one bit. For example, as shown in FIG. 2, a BWP size is equal to 23, and a base station indicates that an RBG size is a configuration 2. In this case, it can be learned from Table 1 that the RBG size is equal to 4, and it may be understood that every four common resource blocks (common resource block, CRB) form one RBG. It is assumed that the BWP starts from a CRB 3 and ends with a CRB 25. Therefore, in the BWP, a virtual resource block (virtual resource block, VRB) 0 (the VRB 0 corresponds to the CRB 3) is an RBG, that is, an RBG 0; a VRB 1 to a VRB 4 are an RBG 1; and the rest may be deduced by analogy. For example, if indication information on the physical downlink control channel (physical downlink control channel, PDCCH) is 0100100, frequency domain resources occupied by a physical downlink shared channel (physical downlink shared channel, PDSCH) are an RBG 1 and an RBG 4.

(2) Downlink resource allocation type 1

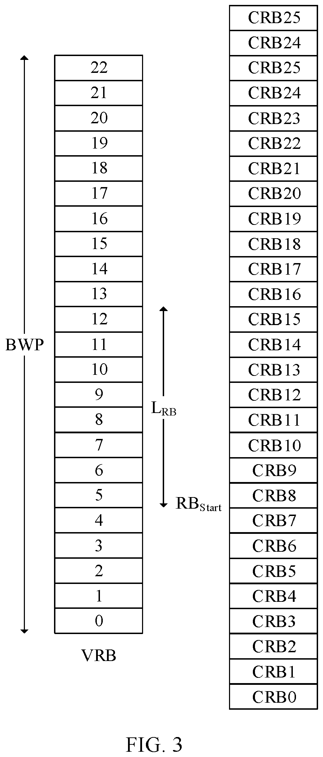

The downlink resource allocation type 1 is consecutively allocated. A PDCCH delivered by a base station to UE may indicate a start VRB ($RB_{start}$) of a downlink frequency domain resource and a quantity ($L_{RB}$) of consecutively allocated RBs. As shown in FIG. 3, if $RB_{start}$ in the PDCCH is equal to 5, and $L_{RB}$ is equal to 7, a VRB 5 to a VRB 12 are allocated to the UE.

The NR uplink resource allocation manner is similar to a downlink resource allocation manner.

4. Transport block size (transport block size, TBS)

A TBS may be a size of data included in a transport block (transport block, TB). Downlink transmission is used as an example, and the TBS is calculated as follows.

First, a quantity of resource elements (resource element, RE) in a slot (slot) may be determined, and a quantity of REs allocated to a PDSCH in each physical resource block (physical resource block, PRB) is calculated by using formula (1).

$$N'_{RE} = N_{sc}^{RB} \cdot N_{symb}^{sh} - N_{DMRS}^{PRB} - N_{oh}^{PRB} \quad (1)$$

$N'_{RE}$ represents a quantity of REs allocated to the PDSCH in one PRB. $N_{sc}^{RB}$ represents a quantity of subcarriers in one PRB, for example, is equal to 12. $N_{symb}^{sh}$ represents a quantity of symbols allocated to the PDCSH in one slot. $N_{DMRS}^{PRB}$ represents a quantity of REs occupied by a demodulation reference signal (demodulation reference signal, DMRS) in one PRB. $N_{oh}^{PRB}$ is overheads (overheads), and is indicated by the base station by using a higher-layer parameter (a parameter (xOverhead) in a physical downlink shared channel-serving cell configuration (PDSCH-ServingCellConfig)), and a value range is {6, 12, 18}. If the base station does not indicate the value of $N_{oh}^{PRB}$, $N_{oh}^{PRB}$ is 0.

Further, a quantity of REs used to calculate the TBS is obtained by using formula (2).

$$N_{RE} = \min(156, N'_{RE}) \cdot n_{PRB} \quad (2)$$

$N_{RE}$ represents a total quantity of REs allocated to the PDSCH, and $n_{PRB}$ represents a quantity of PRBs allocated to the PDSCH.

Further, a quantity of information bits is obtained by using formula (3).

$$N_{\inf o} = N_{RE} \cdot R \cdot Q_m \cdot \upsilon \quad (3)$$

$N_{\inf o}$ represents a quantity of information bits, R is a bit rate, $Q_m$ is a modulation order, and $\upsilon$ is a quantity of transport layers. R and $Q_m$ are found in a protocol table by using a value indicated by a modulation and coding scheme (modulation and coding scheme, MCS) field in downlink control information (downlink control information, DCI).

If $N_{\inf o} \leq 3824$, a quantized intermediate value of the information bit is calculated by using formula (4).

$$N'_{\inf o} = \max\left( 24, 2^n \cdot \left\lfloor \frac{N_{\inf o}}{2^n} \right\rfloor \right) \quad (4)$$

$N'_{\inf o}$ represents a quantized intermediate value of the information bit, $n = max(3, [log_2(N_{\inf o})]-6)$, and a nearest value that is found in a protocol table and that is not less than $N'_{\inf o}$ is used as the TBS.

If $N_{\inf o} > 3824$, the quantized intermediate value of the information bit is calculated by using formula (5).

$$N'_{\inf o} = \max\left( 3840, 2^n \times \text{round}\left( \frac{N_{\inf o} - 24}{2^n} \right) \right) \quad (5)$$

$$n = \lfloor \log_2(N_{\inf o} - 24)] \rfloor - 5$$

If the bit rate is $R \le 1/4$, the TBS may be calculated based on formula (6).

$$TBS = 8 \cdot C1 \cdot \left\lceil \frac{N'_{\inf o} + 24}{8 \cdot C1} \right\rceil - 24 \quad (6)$$

$$C1 = \left\lceil \frac{N'_{\inf o} + 24}{3816} \right\rceil$$

Otherwise,

if $N'_{\inf o} > 8424$, the TBS may be calculated based on formula (7).

$$TBS = 8 \cdot C2 \cdot \left\lceil \frac{N'_{\inf o} + 24}{8 \cdot C2} \right\rceil - 24 \quad (7)$$

$$C2 = \left\lceil \frac{N'_{\inf o} + 24}{8424} \right\rceil$$

Otherwise, the TBS may be calculated based on formula (8).

$$TBS = 8 \cdot \left\lceil \frac{N'_{\inf o} + 24}{8} \right\rceil - 24 \quad (8)$$

5. Rate match (rate match) resource

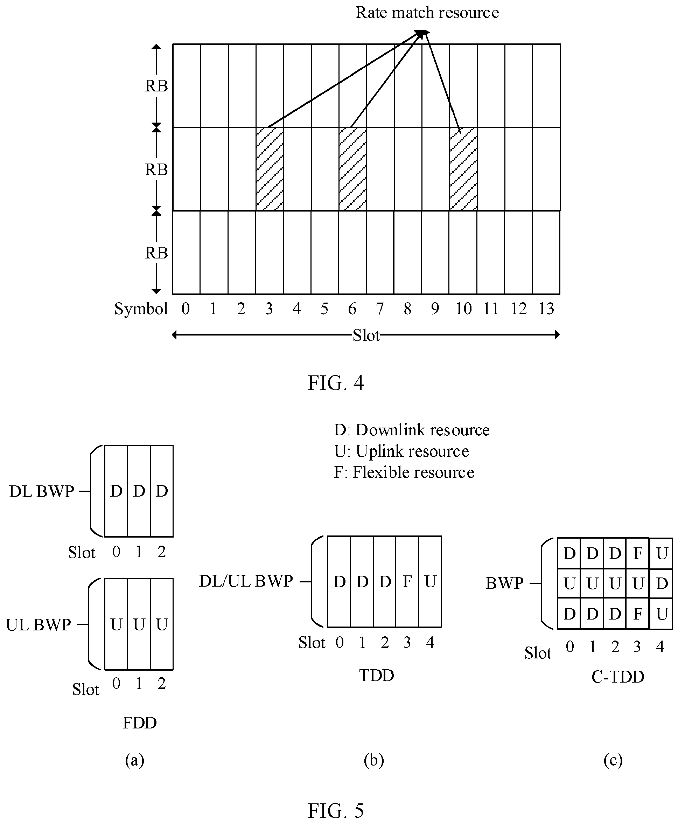

A rate match resource may be understood as a resource that cannot be used to transmit a PDSCH. In frequency domain, a bitmap indicates which RBs are rate match resources. In time domain, a bitmap may indicate which symbols are rate match resources. As shown in a square with slashes in FIG. 4, a resource on a middle RB of symbols 3, 6, and 10 is a rate match resource. In this case, the PDSCH cannot be transmitted by using the resource. That is, it may be understood that a processed modulation symbol of a TB carried on the PDSCH cannot be mapped to the rate match resource. Although the rate match resource cannot be used for PDSCH transmission, TBS calculation is not affected. In other words, the UE still calculates the TBS based on a size of a downlink resource indicated by the base station. In addition, the DCI may further indicate whether the rate match resource can be used for PDSCH transmission, that is, the rate match resource is not completely incapable of being used for PDSCH transmission.

6. Duplex mode

Currently, there is frequency division duplex (frequency division duplex, FDD) and time division duplex (time division duplex, TDD) in NR.
FDD may be understood as that downlink transmission and uplink transmission may be simultaneously performed, but uplink transmission and downlink transmission are performed at different frequencies. For example, as shown in (a) in FIG. 5, in a slot 0, UE may receive downlink data on a downlink (downlink, DL) BWP, or may send uplink data on an uplink (uplink, UL) BWP in the slot 0.
TDD may be understood as that downlink transmission and uplink transmission cannot be simultaneously performed. For example, as shown in (b) in FIG. 5, in a slot 0, UE can receive only downlink data, and in a slot 4, the UE can send only uplink data. A slot 3 is a flexible (flexible) slot, that is, the UE can send the uplink data or receive the downlink data, but cannot send the uplink data and receive the downlink data at the same time.

Compared with FDD, TDD occupies fewer frequency domain resources. However, because a transmission direction in a slot in TDD is fixed, for example, only downlink transmission can be performed in the slot 0 shown in (b) in FIG. 5, and uplink transmission cannot be performed, an uplink transmission delay is increased. For another example, only uplink transmission can be performed in the slot 4 shown in (b) in FIG. 5, and downlink transmission cannot be performed. To resolve a delay problem of TDD, C-TDD is proposed. C-TDD may also be referred to as full duplex (full duplex). As shown in (c) in FIG. 5, a frequency domain resource is configured in a BWP in a slot 0, and uplink transmission may be performed on the frequency domain resource. In this way, uplink data may be sent or downlink data may be received in the slot 0, or both uplink data and downlink data may be sent in the slot 0, thereby reducing an uplink transmission latency. In addition, compared with TDD, C-TDD has more uplink resources, and may also increase uplink coverage. Similarly, in a slot 4 shown in (c) in FIG. 5, a frequency domain resource may be configured in the BWP, and downlink transmission may be performed on the frequency domain resource. In this way, uplink data may be sent or downlink data may be received in the slot 4, or both uplink data and downlink data may be sent in the slot 4, thereby reducing a downlink transmission latency. In C-TDD, a frequency domain resource may be configured in the BWP on one or more symbols, and uplink transmission may be performed on the frequency domain resource.

However, the resource allocation type 0 and the resource allocation type 1 are for FDD and TDD. If the resource allocation type 0 and the resource allocation type 1 are directly used in C-TDD, a downlink resource allocated by a base station to the UE may include an uplink RB, thereby affecting downlink transmission between the base station and the UE, or an uplink resource allocated by the base station to the UE includes a downlink RB, thereby affecting uplink transmission between the base station and the UE.

In view of this, an embodiment of this application provides a data transmission method, to ensure data transmission performance of C-TDD.

The following describes in detail the method provided in embodiments of this application with reference to the accompanying drawings.

It should be understood that, for ease of understanding and description, the following describes in detail the method provided in embodiments of this application based on interaction between a terminal device and a network device as an example. However, this should not constitute any limitation on an execution body of the method provided in this application. For example, the terminal device shown in the following embodiments may be replaced with a component (such as a circuit, a chip, or a chip system) configured in the terminal device. The network device shown in the following embodiments may also be replaced with a component (such as a circuit, a chip, or a chip system) configured in the network device.

A specific structure of an entity for executing the method provided in embodiments of this application is not particularly limited in the following embodiments, provided that a program that records code of the method provided in embodiments of this application can be run, to perform communication according to the method provided in embodiments of this application. For example, the method provided in embodiments of this application may be performed by a terminal device or a network device, or may be performed by a functional module that is in a terminal device or a network device and that can invoke and execute a program.

It should be further noted that, in the following embodiments, that the terminal device and the network device transmit a TB may be that the network device sends a downlink TB to the terminal device, where the downlink TB is a TB corresponding to a PDSCH; or may be that the terminal device sends an uplink TB to the network device, where the uplink TB is a TB corresponding to a PUSCH. The TB corresponding to the PDSCH may be understood as carrying the TB on the PDSCH. Specifically, after a series of physical layer processing including CRC addition, code block segmentation, coding, code block concatenation, rate matching, scrambling, modulation, layer mapping, and the like, the TB is finally mapped to a resource used to transmit the PDSCH. Processing on the TB corresponding to the PUSCH is similar.

It should be further noted that the embodiments in this application may be independent of each other, or may be combined with each other. Specifically, this is not limited in this application.

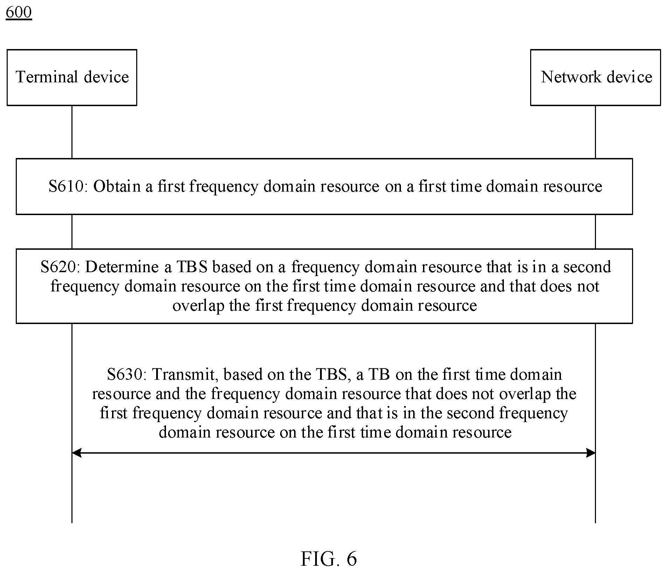

FIG. 6 is a schematic flowchart of a data transmission method 600 according to an embodiment of this application from a perspective of device interaction. As shown in FIG. 6, the method 600 may include S610 to S630. The following describes steps in the method 600 in detail.

S610: A terminal device and a network device obtain a first frequency domain resource on a first time domain resource.

The first time domain resource is a time domain resource that is allocated by the network device to the terminal device for transmitting a TB for one time, and the first frequency domain resource on the first time domain resource cannot be used to transmit the TB. The TB is a TB corresponding to a PDSCH or a TB corresponding to a PUSCH.

A manner in which the terminal device and the network device obtain the first frequency domain resource on the first time domain resource is not limited in this embodiment of this application.

In a possible implementation, the first frequency domain resource on the first time domain resource is predefined.

In another possible implementation, the first frequency domain resource on the first time domain resource is determined by the network device, and is configured by the network device for the terminal device.

For example, the network device may configure the first frequency domain resource on the first time domain resource for the terminal device through higher layer signaling and/or physical layer signaling. For example, the network device configures the first frequency domain resource on the first time domain resource for the terminal device through the higher layer signaling (for example, a radio resource control (radio resource control, RRC) message or a media access control (media access control, MAC) control element (control element, CE)). For another example, the network device configures a third frequency domain resource for the terminal device through higher layer signaling (for example, the RRC message or the MAC CE). Further, the network device indicates, to the terminal device through physical layer signaling (for example, DCI), that all or some of the third frequency domain resource cannot be used to transmit the TB on the first time domain resource. If the physical layer signaling indicates that all of the third frequency domain resource cannot be used to transmit the TB on the first time domain resource, the first frequency domain resource on the first time domain resource is equivalent to the third frequency domain resource on the first time domain resource. If the physical layer signaling indicates that a part of the third frequency domain resource cannot be used to transmit the TB on the first time domain resource, the first frequency domain resource on the first time domain resource is a frequency domain resource that cannot be used by the third frequency domain resource to transmit the TB on the first time domain resource.

In another possible implementation, the network device indicates, through the higher layer signaling or the physical layer signaling, that the first frequency domain resource on the first time domain resource cannot be used to transmit the TB. The physical layer signaling includes a bit in the DCI, and the bit may further be a bit that indicates whether a rate match resource is available or unavailable.

S620: The terminal device and the network device determine a TBS based on a frequency domain resource that is in the second frequency domain resource on the first time domain resource and that does not overlap the first frequency domain resource.

The second frequency domain resource on the first time domain resource is a frequency domain resource that is indicated by the DCI and that is used to transmit the TB, or the second frequency domain resource on the first time domain resource is a frequency domain resource that is allocated by the network device to the terminal device and that is used to transmit the TB. A manner in which the network device allocates the second frequency domain resource on the first time domain resource to the terminal device is not limited in this embodiment of this application. For example, the network device allocates the second frequency domain resource on the first time domain resource to the terminal device by using the resource allocation type 0 described above. In other words, the DCI sent by the network device to the terminal device includes an RBG bitmap that indicates the second frequency domain resource. For another example, the network device allocates the second frequency domain resource on the first time domain resource to the terminal device by using the resource allocation type 1 described above, that is, the DCI sent by the network device to the terminal device indicates a start VRB ($RB_{start}$) of the second frequency domain resource on the first time domain resource and a quantity ($L_{RB}$) of consecutive RBs. For another example, the network device may further allocate the second frequency domain resource on the first time domain resource to the terminal device in a manner described in the following method 1300.

For example, a relationship between the first frequency domain resource on the first time domain resource and the second frequency domain resource on the first time domain resource is as follows.

If the TB is a TB corresponding to the PDSCH, the first frequency domain resource on the first time domain resource is a frequency domain resource that cannot be used for downlink transmission. For example, the first frequency domain resource on the first time domain resource is a frequency domain resource or a rate match resource used for uplink transmission, and the second frequency domain resource on the first time domain resource is a frequency domain resource that is allocated by the network device to the terminal device and that is used for downlink transmission. If the TB is a TB corresponding to the PUSCH, the first frequency domain resource on the first time domain resource cannot be used for uplink transmission. For example, the first frequency domain resource on the first time domain resource is a frequency domain resource used for downlink transmission or a rate match resource, and the second frequency domain resource on the first time domain resource is a frequency domain resource allocated by the network device to the terminal device for uplink transmission.

In a possible implementation, the terminal device and the network device determine the TBS based on a quantity of frequency domain resource units included in a frequency domain resource that is in the second frequency domain resource on the first time domain resource and that does not overlap the first frequency domain resource. For example, the frequency domain resource unit may be an RBG, an RB, an RE, or the like. For ease of description, the frequency domain resource unit included in the frequency domain resource that is in the second frequency domain resource on the first time domain resource and that does not overlap the first frequency domain resource is denoted as the first frequency domain resource unit below. For example, a granularity of the first frequency domain resource unit may be an RBG, an RB, an RE, or the like.

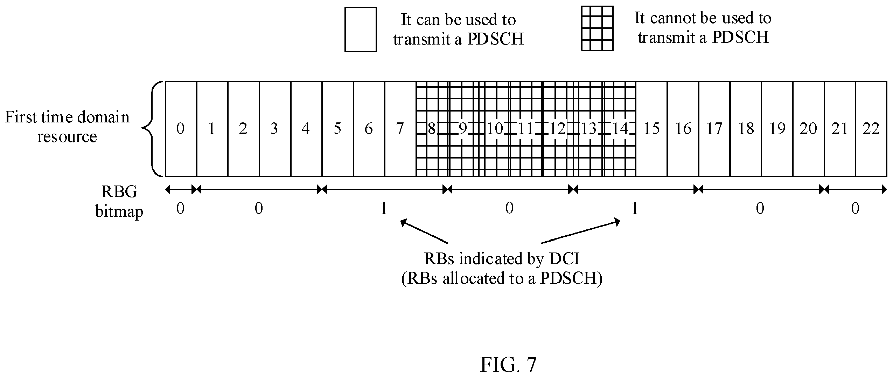

With reference to FIG. 7 to FIG. 9, the following describes how the terminal device determines a quantity of first frequency domain resource units by using an example in which the second frequency domain resource on the first time domain resource is a downlink frequency domain resource allocated by the network device to the terminal device.

For example, as shown in FIG. 7, an RB 8 to an RB 14 on the first time domain resource are frequency domain resources that cannot be used to transmit the PDSCH, that is, the first frequency domain resource on the first time domain resource includes the RB 8 to the RB 14. The terminal device determines, based on an RBG bitmap (0010100) included in the received DCI, that an RB 5 to the RB 8 and an RB 13 to an RB 16 on the first time domain resource are frequency domain resources that are allocated by the network device to the terminal device and that are used to transmit the PDSCH. In other words, the second frequency domain resource on the first time domain resource includes the RB 5 to the RB 8 and the RB 13 to the RB 16. For example, the granularity of the first frequency domain resource unit is an RB. RBs that are in the second frequency domain resource on the first time domain resource and that do not overlap the first frequency domain resource are the RB 5 to an RB 7, an RB 15, and the RB 16. In this case, the terminal device determines that the quantity of first frequency domain resource units is equal to 5.

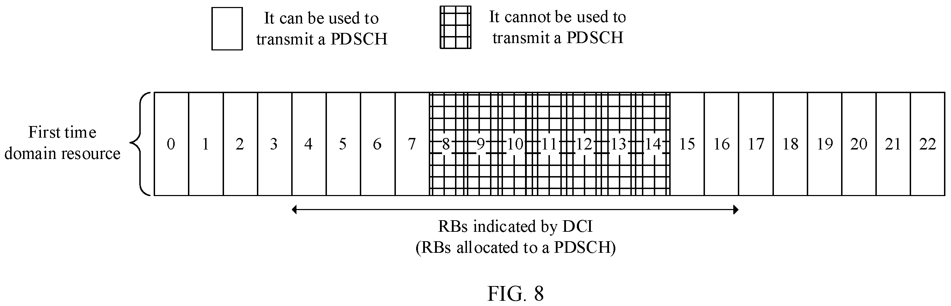

For example, as shown in FIG. 8, an RB 8 to an RB 14 on the first time domain resource are frequency domain resources that cannot be used to transmit the PDSCH, that is, the first frequency domain resource on the first time domain resource includes the RB 8 to the RB 14. When non-interleaving is performed (that is, VRBs are mapped to PRBs in a one-to-one manner), the terminal device determines based on a start VRB indicated by the DCI and a quantity of consecutively allocated RBs. An RB 4 to an RB 16 on the first time domain resource are resources that are allocated by the network device to the terminal device and that are used to transmit the PDSCH. In other words, the second frequency domain resource on the first time domain resource includes the RB 4 to the RB 16. For example, the granularity of the first frequency domain resource unit is an RB. RBs that are in the second frequency domain resource on the first time domain resource and that do not overlap the first frequency domain resource are the RB 4 to an RB 7, an RB 15, and the RB 16. In this case, the terminal device determines that the quantity of first frequency domain resource units is equal to 6.

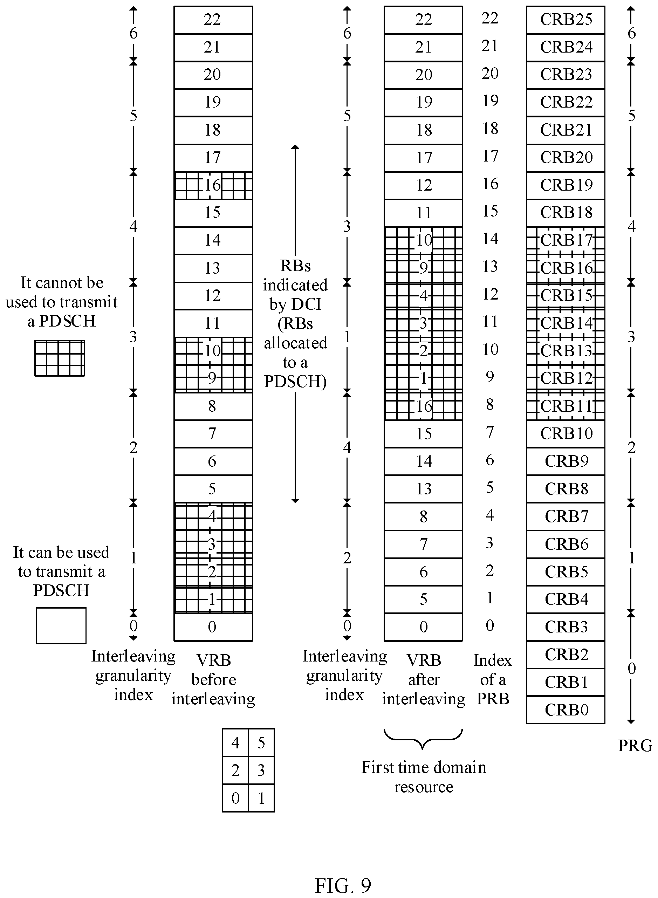

For example, as shown in FIG. 9, a PRB 8 to a PRB 14 on the first time domain resource are frequency domain resources that cannot be used to transmit the PDSCH, that is, the first frequency domain resource on the first time domain resource includes the PRB 8 to the PRB 14. When interleaving is performed (that is, VRBs are not mapped to PRBs in a one-to-one manner), the terminal device determines based on a start VRB indicated by the DCI and a quantity of consecutively allocated RBs. A VRB 5 to a VRB 17 on the first time domain resource are frequency domain resources allocated to the terminal device for transmitting the PDSCH. In other words, a PRB 1 to the PRB 8 and a PRB 13 to a PRB 17 on the first time domain resource are frequency domain resources allocated to the terminal device for transmitting the PDSCH, that is, the second frequency domain resource on the first time domain resource includes the PRB 1 to the PRB 8 and the PRB 13 to the PRB 17. For example, the granularity of the first frequency domain resource unit is an RB. In the second frequency domain resource on the first time domain resource, RBs that do not overlap the first frequency domain resource are the PRB 1 to a PRB 7 and a PRB 15 to the PRB 17, or the VRB 5 to a VRB 8, a VRB 11 to a VRB 15, and the VRB 17. In this case, the terminal device determines that the quantity of first frequency domain resource units is equal to 10.

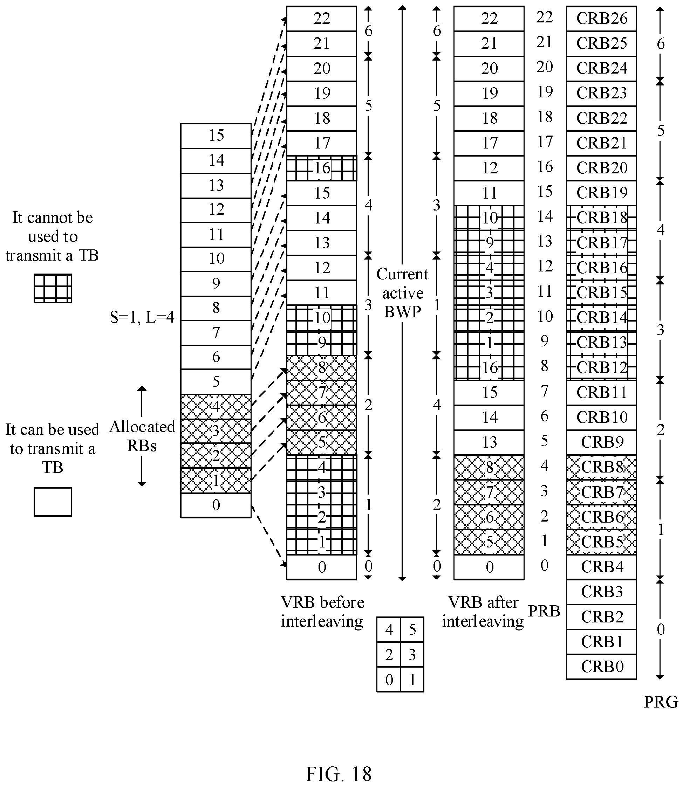

The interleaving manner shown in FIG. 9 is row-column interleaving, that is, an interleaving granularity index is written into a table by column, and then is read by row. For example, in FIG. 9, after the interleaving granularity index (0, 1, 2, 3, 4, 5) is written into the table by column, a row-based reading sequence is (0, 2, 4, 1, 3, 5). An interleaving manner in FIG. 18 below is the same as that in FIG. 9.

Further, in S620, the terminal device and the network device determine the TBS based on the quantity of first frequency domain resource units.

For example, when determining the TBS based on the quantity of first frequency domain resource units, the terminal device and the network device first determine, based on the quantity of first frequency domain resource units, a total quantity of allocated REs used for transmitting the TB.

If the granularity of the first frequency domain resource unit is the RB, the terminal device and the network device may calculate, according to the formula (9), a total quantity of allocated REs that are used to transmit the TB.

$$N_{RE} = \min(156, N'_{RE}) \cdot N_1 \quad (9)$$

N RE represents a total quantity of allocated REs used to transmit the TB. $N_1$ represents a quantity of first frequency domain resource units. $N'_{RE}$ represents a quantity of REs that are allocated in one RB and used to transmit the TB. For a calculation manner of $N_{RE}^{'}$ , refer to the foregoing formula (1).

If the granularity of the first frequency domain resource unit is the RBG, the terminal device and the network device may calculate, according to the formula (10), a total quantity of allocated REs that are used to transmit the TB.

$$N_{RE} = \min(156, N_{RE}^{'}) \cdot N_1 \cdot X \quad (10)$$

X represents an RBG size. For example, X is equal to 2 or 4.

If the granularity of the first frequency domain resource unit is the RE, the terminal device and the network device may calculate, according to the formula (11), a total quantity of allocated REs that are used to transmit the TB.

$$N_{RE} = \min(156, N_{RE}^{'}) \cdot N_1 / Y \quad (11)$$

Y represents a quantity of REs included in one RB. For example, Y is equal to 12.

After determining $N_{RE}$ based on the quantity of first frequency domain resource units, the terminal device and the network device calculate the quantity of information bits based on $N_{RE}$ (refer to the foregoing formula (3)), then calculate the quantized intermediate value of the information bits based on the quantity of information bits (refer to the foregoing formula (4) or formula (5)), and finally calculate the TBS based on the quantized intermediate value of the information bits (refer to the foregoing formula (6), formula (7), or formula (8)).

Optionally, that the terminal device and the network device determine the TBS based on the quantity of first frequency domain resource units includes: The terminal device and the network device determine the TBS based on a ratio of the quantity of first frequency domain resource units to a quantity of frequency domain resource units included in the second frequency domain resource. For ease of description, a frequency domain resource unit included in the second frequency domain resource is denoted as a second frequency domain resource unit below. For example, a granularity of the second frequency domain resource unit may be an RBG, an RB, an RE, or the like.

It should be noted that, when the ratio of the quantity of first frequency domain resource units to the quantity of second frequency domain resource units is determined, the granularity of the second frequency domain resource unit is consistent with the granularity of the first frequency domain resource unit. For example, if the granularity of the first frequency domain resource unit is the RBG, the granularity of the second frequency domain resource unit is also the RBG. For another example, if the granularity of the first frequency domain resource unit is the RB, the granularity of the second frequency domain resource unit is also the RB. For still another example, if the granularity of the first frequency domain resource unit is the RE, the granularity of the second frequency domain resource unit is also the RE.

When determining the TBS based on the ratio of the quantity of first frequency domain resource units to the quantity of second frequency domain resource units, the terminal device and the network device first determine, based on the ratio of the quantity of first frequency domain resource units to the quantity of second frequency domain resource units, a total quantity of allocated REs used for transmitting the TB.

The terminal device and the network device may calculate, according to formula (12), the total quantity of allocated REs used for transmitting the TB.

$$N_{RE} = \min(156, N_{RE}^{'}) \cdot n_{PRB} \cdot \frac{N_1}{N_2} \quad (12)$$

Ni represents a quantity of first frequency domain resource units, $N_2$ represents a quantity of second frequency domain resource units, and $n_{PRB}$ represents a quantity of RBs included in the second frequency domain resource.

After determining $N_{RE}$ based on the ratio of the quantity of first frequency domain resource units to the quantity of second frequency domain resource units, the terminal device and the network device calculate the quantity of information bits based on $N_{RE}$ (refer to the foregoing formula (3)), then calculate the quantized intermediate value of the information bits based on the quantity of information bits (refer to the foregoing formula (4) or formula (5)), and finally calculate the TBS based on the quantized intermediate value of the information bits (refer to the foregoing formula (6), formula (7), or formula (8)).

Alternatively, when determining the TBS based on the ratio of the quantity of first frequency domain resource units to the quantity of second frequency domain resource units, the terminal device and the network device first determine, based on the ratio of the quantity of first frequency domain resource units to the quantity of second frequency domain resource units, a quantity of bits that can be carried on the RE used to transmit the TB.

The terminal device and the network device may calculate, according to the formula (12), the quantity of bits that can be carried on the RE used to transmit the TB.

$$N_{\inf o} = N_{RE} \cdot R \cdot Q_m \cdot \upsilon \cdot \frac{N_1}{N_2} \quad (13)$$

$N_{\inf o}$ is a quantity of information bits, may be understood as a quantity of bits that can be carried on the RE used to transmit the TB, $N_{RE}$ represents a total quantity of allocated REs used to transmit the TB, for a calculation manner of $N_{RE}$, refer to the foregoing formula (2), $R$ is a bit rate, $Q_m$ is a modulation order, and $\upsilon$ is a quantity of transport layers.

After determining the quantity of information bits based on the ratio of the quantity of first frequency domain resource units to the quantity of second frequency domain resource units, the terminal device and the network device calculate the quantized intermediate value of the information bits based on the quantity of information bits (refer to the foregoing formula (4) or formula (5)), and finally calculate the TBS based on the quantized intermediate value of the information bits (refer to the foregoing formula (6) or formula (7)).

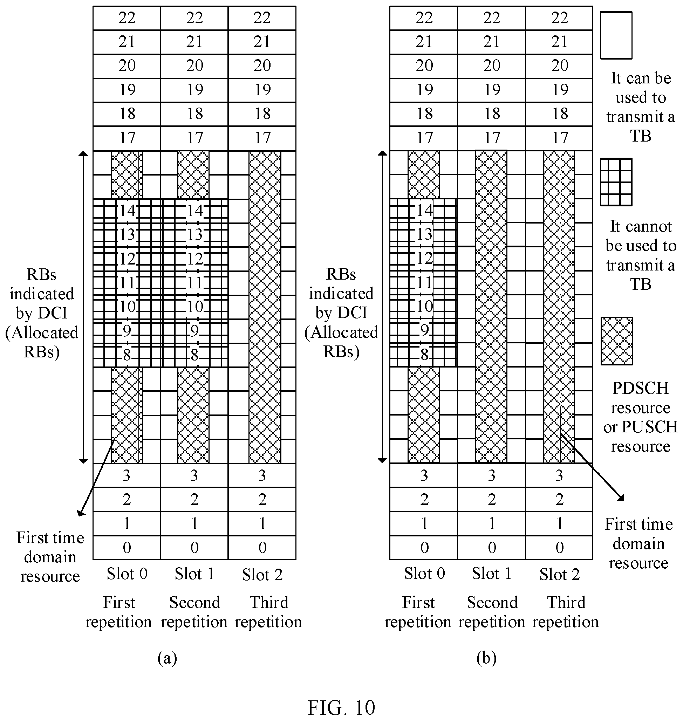

As described above, the first time domain resource is a time domain resource that is allocated by the network device to the terminal device and that is used to transmit the TB for one time. If the network device allocates, only to the terminal device, a time domain resource for transmitting the TB for one time, the first time domain resource is a time domain resource allocated by the network device to the terminal device. If the network device allocates, to the terminal device, a plurality of time domain resources used to repeatedly transmit the TB, the first time domain resource is one of the plurality of time domain resources. As shown in FIG. 10, the network device allocates three time domain resources to the terminal device: a slot 0, a slot 1, and a slot 2. The terminal device and the network device perform repeated transmission for a first time in the slot 0, perform repeated transmission for a second time in the slot 1, and perform repeated transmission for a third time in the slot 2. In this case, the first time domain resource is a time domain resource allocated for transmitting the TB for one time in the slot 0, or the first time domain resource is a time domain resource allocated for transmitting the TB for one time in the slot 1. The first time domain resource is an allocated time domain resource for transmitting the TB for one time in the slot 2. A time domain resource used to transmit the TB for one time in the slot 0 is all or some time domain resources in the slot 0. This is similar to cases for the slot 1 and the slot 2.

In this embodiment of this application, a specific time domain resource in the plurality of time domain resources that is the first time domain resource is not limited.

In an example, the first time domain resource is the first time domain resource in the plurality of time domain resources, and the first time domain resource is a time domain resource for performing the TB transmission for a first time. For example, as shown in FIG. 10, the first time domain resource is a time domain resource allocated for transmitting the TB for one time in the slot 0.

In another example, the first time domain resource is a first-type time domain resource in the plurality of time domain resources, and the first frequency domain resource on the first-type time domain resource cannot be used to transmit the TB, or a frequency domain resource corresponding to the first-type time domain resource includes a frequency domain resource unit that cannot be used to transmit the TB. For example, as shown in (a) in FIG. 10, none of an RB 8 to an RB 14 on a frequency domain resource corresponding to the slot 0 and the slot 1 can be used to transmit the TB. In other words, the slot 0 and the slot 1 are first-type time domain resources, and the first time domain resource may be a time domain resource allocated to transmit the TB for one time in the slot 0 or the slot 1.

The terminal device and the network device may determine, based on max (A, B)=A, that the first time domain resource is the first-type time domain resource in the plurality of time domain resources.

A represents a quantity of first-type time domain resources in the plurality of time domain resources, B represents a quantity of second-type time domain resources in the plurality of time domain resources, and a frequency domain resource corresponding to the second-type time domain resource does not include a frequency domain resource unit that cannot be used to transmit the TB. For example, as shown in (a) in FIG. 10, the slot 0 and the slot 1 are first-type time domain resources, that is, A is equal to 2. All RBs on a frequency domain resource corresponding to the slot 2 may be used to transmit the TB, that is, the slot 2 is a second-type time domain resource, and B is equal to 1. In this case, the terminal device and the network device determine, based on max (2, 1)=2, that the first time domain resource is the first-type time domain resource in the plurality of time domain resources, that is, the first time domain resource is a time domain resource allocated transmitting the TB for one time in the slot 0 or the slot 1.

Alternatively, the terminal device and the network device may determine, based on min (A, B)=A, that the first time domain resource is the first-type time domain resource in the plurality of time domain resources.

A represents a quantity of frequency domain resource units that are on the second frequency domain resource and that can be used to transmit the TB on the first-type time domain resource. B represents a quantity of frequency domain resource units that are on the second frequency domain resource and that can be used to transmit the TB on the second-type time domain resource. For example, as shown in (a) in FIG. 10, the second frequency domain resource includes an RB 4 to an RB 16. A quantity of RBs (the RB 4 to an RB 7, an RB 15, and the RB 16) that can be used to transmit the TB on the second frequency domain resource on the first-type time domain resource (that is, the slot 0 or the slot 1) is 6, that is, A is equal to 6. A quantity of RBs (the RB 4 to the RB 16) that can be used by the second frequency domain resource to transmit the TB on the second time domain resource (that is, the slot 2) is 13, in other words, B is equal to 13. In this case, the terminal device and the network device determine, based on min (6, 13)=6, that the first time domain resource is the first-type time domain resource in the plurality of time domain resources, that is, the first time domain resource is a time domain resource allocated transmitting the TB for one time in the slot 0 or the slot 1. If min (A, B)=B, the first time domain resource is the second-type time domain resource in the plurality of time domain resources.

In another example, the first time domain resource is the second-type time domain resource in the plurality of time domain resources.

The terminal device and the network device may determine, based on max (A, B)=B, that the first time domain resource is the second-type time domain resource in the plurality of time domain resources.

A represents a quantity of first-type time domain resources in the plurality of time domain resources, and B represents a quantity of second-type time domain resources in the plurality of time domain resources. For example, as shown in (b) in FIG. 10, the slot 0 is a first-type time domain resource, that is, A is equal to 1. The slot 1 and the slot 2 are second-type time domain resources, that is, B is equal to 2. In this case, the terminal device and the network device determine, based on max (1, 2)=2, that the first time domain resource is the second-type time domain resource in the plurality of time domain resources, that is, the first time domain resource is a time domain resource allocated transmitting the TB for one time in the slot 1 or the slot 2.

A manner in which the terminal device and the network device determine the first time domain resource from the plurality of time domain resources may be predefined. Alternatively, the network device determines the manner of determining the first time domain resource from the plurality of time domain resources, and indicates, to the terminal device by using higher layer signaling or physical layer signaling, the manner of determining the first time domain resource from the plurality of time domain resources. Alternatively, after determining the first time domain resource from the plurality of time domain resources in the foregoing manner, the network device indicates, to the terminal device by using the physical layer signaling, which time domain resource in the plurality of time domain resources is specifically the first time domain resource.

When the network device indicates, to the terminal device, the manner of determining the first time domain resource from the plurality of time domain resources, the method 600 further includes: The network device sends indication information #1 to the terminal device, where the indication information #1 indicates the manner of determining the first time domain resource from the plurality of time domain resources. For example, the indication information #1 indicates to determine the first time domain resource from the plurality of time domain resources based on max (A, B), where A indicates a quantity of first-type time domain resources in the plurality of time domain resources, and B indicates a quantity of second-type time domain resources in the plurality of time domain resources. For another example, the indication information #1 indicates that the first time domain resource is determined from the plurality of time domain resources based on min (A, B), where A indicates a quantity of frequency domain resource units that are on the second frequency domain resource and that can be used to transmit the TB on the first-type time domain resource, and B indicates a quantity of frequency domain resource units that are on the second frequency domain resource and that can be used to transmit the TB on the second-type time domain resource.

When the network device indicates, to the terminal device, which time domain resource in the plurality of time domain resources is specifically the first time domain resource, the method 600 further includes: The network device sends indication information #2 to the terminal device, where the indication information #2 indicates the first time domain resource in the plurality of time domain resources.

S630: The terminal device and the network device transmit, based on the TBS, the TB on the first time domain resource and the frequency domain resource that does not overlap the first frequency domain resource and that is in the second frequency domain resource on the first time domain resource.

Optionally, if the network device allocates, to the terminal device, the plurality of time domain resources used to repeatedly transmit the TB, in S630, the terminal device and the network device transmit, based on the TBS, the TB on each time domain resource and on the frequency domain resource that is in the second frequency domain resource on each time domain resource and that does not overlap the first frequency domain resource.

In this embodiment of this application, if the first frequency domain resource cannot be used to transmit the TB on the first time domain resource, and the second frequency domain resource that is allocated by a network device to a terminal device and that is used to transmit the TB overlaps the first frequency domain resource on the first time domain resource, the terminal device and the network device determine the TBS based on the frequency domain resource that is in the second frequency domain resource on the first time domain resource and that does not overlap the first frequency domain resource, to determine a more proper TBS. Further, transmitting the TB based on the TBS may improve data transmission performance.

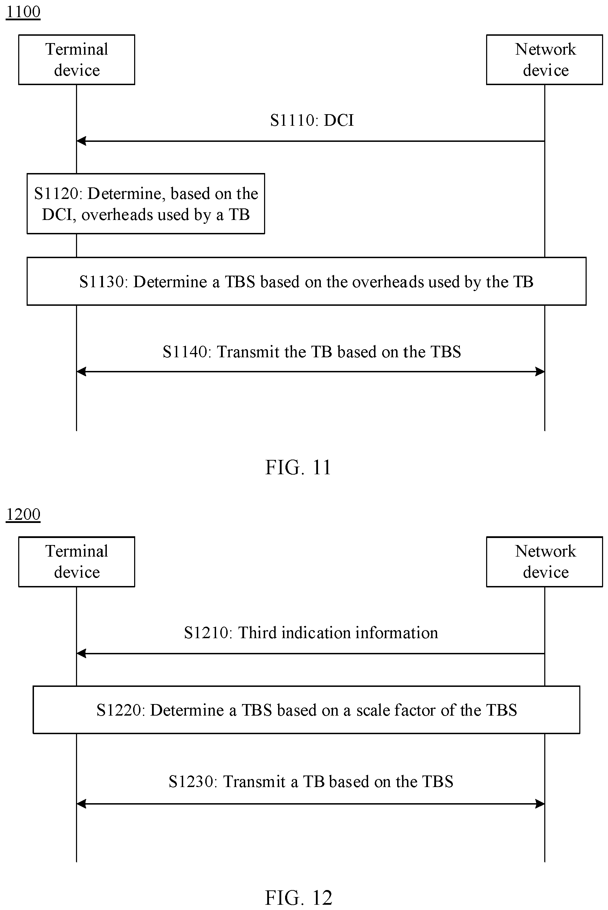

FIG. 11 is a schematic flowchart of a data transmission method 1100 according to another embodiment of this application. As shown in FIG. 11, the method 1100 may include S1110 to S1140. The following describes steps in the method 1100 in detail.

S1110: A network device sends DCI.

Correspondingly, a terminal device receives the DCI.

The DCI indicates a second frequency domain resource that is allocated by the network device to the terminal device and that is used to transmit a TB. How the DCI indicates the second frequency domain resource is not limited in this embodiment of this application. For example, the DCI includes an RBG bitmap, and the RBG bitmap indicates the second frequency domain resource allocated to the terminal device. For another example, the DCI indicates a start VRB ($RB_{start}$) and a quantity ($L_{RB}$) of consecutive RBs of the second frequency domain resource on the first time domain resource.

Optionally, the DCI further includes a bit value that indicates overheads used for calculating the TBS.

S1120: The terminal device determines, based on the DCI, the overheads used for calculating the TBS.

The TB is a TB corresponding to a PDSCH, or a TB corresponding to a PUSCH.

Specifically, after the terminal device determines the second frequency domain resource indicated by the DCI, if the second frequency domain resource and the first frequency domain resource overlap on the first time domain resource, the terminal device determines, based on the DCI, the overheads used for calculating the TBS. Alternatively, if the second frequency domain resource and the first frequency domain resource do not overlap on the first time domain resource, the terminal device determines an overhead value configured by using an RRC message as the overheads used for calculating the TBS. The first time domain resource is a time domain resource that is allocated by the network device to the terminal device for transmitting the TB for one time, and the first frequency domain resource cannot be used to transmit the TB on the first time domain resource.

In a possible implementation, after the network device determines the second frequency domain resource allocated to the terminal device, if the second frequency domain resource overlaps the first frequency domain resource on the first time domain resource, the DCI sent by the network device to the terminal device includes a bit value that indicates the overheads used for calculating the TBS. Correspondingly, the terminal device determines, from a first overhead value set based on the bit value, the overheads used for calculating the TBS.

The first overhead value set includes at least one overhead value, and the first overhead value set is predefined in a protocol, or is configured by the network device by using higher layer signaling. For example, if the first overhead value set is {A, B, C, D}, 2 bits are used in the DCI to indicate the overheads used for calculating the TBS. For example, if the DCI includes a bit value 00, the terminal device determines, based on the bit value, that the overheads used for calculating the TBS are A. If the DCI includes a bit value 01, the terminal device determines, based on the bit value, that the overheads used for calculating the TBS are B. If the DCI includes a bit value 10, the terminal device determines, based on the bit value, that the overheads used for calculating the TBS are C. If the DCI includes a bit value 11, the terminal device determines, based on the bit value D, that the overheads used for calculating the STB are D. Values of A, B, C, or D are not limited in this embodiment of this application. For example, A, B, C, and D are: 6, 12, 18, and 24.

Optionally, the network device determines, from the first overhead value set based on a frequency domain resource that is in the second frequency domain resource and on the first time domain resource and that overlaps the first frequency domain resource, the overheads used for calculating the TBS. For example, if a large frequency domain resource in the second frequency domain resource on the first time domain resource overlaps the first frequency domain resource, the network device may select a large overhead value from the overhead value set as the overheads used for calculating the TBS. If a small frequency domain resource in the second frequency domain resource on the first time domain resource overlaps the first frequency domain resource, the network device may select a small overhead value from the overhead value set to determine the overheads used for calculating the TBS.

In another possible implementation, after determining that the second frequency domain resource indicated by the DCI and the first frequency domain resource overlap on the first time domain resource, the terminal device determines, from the first overhead value set, the overheads used for calculating the TBS. The first overhead value set is different from a second overhead value set, and the second overhead value set is used to determine overheads configured by the network device for the terminal device by using an RRC message.

Optionally, the terminal device determines, from the first overhead value set based on a frequency domain resource that is in the second frequency domain resource and on the first time domain resource and that overlaps the first frequency domain resource, the overheads used for calculating the TBS.

Optionally, the overheads used for calculating the TBS further include overheads configured by the network device for the terminal device by using the RRC message. In other words, the overheads used for calculating the TBS include overheads determined by the terminal device from the first overhead value set based on the DCI and the overheads configured by the network device for the terminal device by using the RRC message.

S1130: The terminal device and the network device determine the TBS based on overheads used by the TB.

When determining the TBS based on the overheads used by the TB, the terminal device and the network device first calculate, based on the overheads used by the TB, a quantity of REs that are allocated to one RB and that are used to transmit the TB. The overheads used by the TB may be understood as the overheads used for calculating the TBS.

For example, the terminal device and the network device may calculate, according to the foregoing formula (1), the quantity of REs that are allocated to the RB and that are used to transmit the TB. It should be noted that when the terminal device and the network device calculate, according to the foregoing formula (1), the quantity of REs that are allocated to the RB and that are used to transmit the TB, $N_{oh}^{PRB}$ represents overheads used by the TB determined based on the DCI, instead of overheads configured by the network device by using a higher layer parameter.

For another example, if the overheads used by the TB further include the overheads configured by the network device for the terminal device by using the RRC message, the terminal device and the network device may calculate, according to formula (14), the quantity of REs that are allocated to the RB and that are used to transmit the TB.

$$N_{RE}^{'} = N_{sc}^{RB} \cdot N_{symb}^{sh} - N_{DMRS}^{PRB} - N_{oh}^{PRB} - N_{oh2}^{PRB} \quad (14)$$

$N_{RE}^{'}$ represents the quantity of REs that are allocated to the RB and that are used to transmit the TB. $N_{DMRS}^{PRB}$ represents a quantity of REs occupied by a DMRS in the RB. $N_{sc}^{RB}$ represents a quantity of subcarriers in the RB, for example, is equal to 12. $N_{oh}^{PRB}$ represents the overheads configured by the network device for the terminal device by using the RRC message. $N_{oh2}^{PRB}$ represents overheads determined from the first overhead value set based on the DCI.

Further, the terminal device and the network device calculate a total quantity of allocated REs used to transmit the TB (refer to the foregoing formula (2)) based on $N_{RE}^{'}$, calculate a quantity of information bits based on the total quantity of allocated REs used to transmit the TB (refer to the foregoing formula (3)), calculate a quantized intermediate value of the information bits based on the quantity of information bits (refer to the foregoing formula (4) or (5)), and finally calculate the TBS based on the quantized intermediate value of the information bits (refer to the foregoing formula (6), (7), or (8)).

S1140: The terminal device and the network device transmit the TB based on the TBS.

Specifically, the terminal device and the network device transmit, based on the TBS, the TB on the first time domain resource and the frequency domain resource that does not overlap the first frequency domain resource and that is in the second frequency domain resource on the first time domain resource.

In this embodiment of this application, the terminal device dynamically determines, based on the DCI, overheads used for calculating the TBS, and determines the TBS based on the determined overheads, to determine a more proper TBS. Further, when the TB is transmitted based on the TBS, data transmission performance may be improved.

FIG. 12 is a schematic flowchart of a data transmission method 1200 according to another embodiment of this application. As shown in FIG. 12, the method 1200 may include S1210 to S 1230. The following describes steps in the method 1200 in detail.

S1210: A network device sends third indication information.

The third indication information indicates a scale factor of a TBS of a transport block TB in a unicast scenario. The TB transmitted in the unicast scenario is a TB corresponding to a unicast PDSCH, and the unicast PDSCH is a PDSCH scheduled by using a PDCCH scrambled by using a radio network temporary identifier (radio network temporary identifier, RNTI) specific to a terminal device. The RNTI specific to the terminal device includes: a cell radio network temporary identifier (cell radio network temporary identifier, C-RNTI), a modulation and coding scheme cell radio network temporary identifier (modulation and coding scheme cell radio network temporary identifier, MCS-C-RNTI), or a configured scheduling radio network temporary identifier (configured scheduling radio network temporary identifier, CS-RNTI).

The third indication information may be carried in higher layer signaling, for example, an RRC message or a MAC CE, or may be carried in physical layer signaling, for example, DCI.

Optionally, after allocating, to the terminal device, a second frequency domain resource used to transmit the TB in the unicast scenario, the network device determines, from a scale factor set based on a frequency domain resource that is in the second frequency domain resource and the first frequency domain resource and that overlaps the first time domain resource, a scale factor used to calculate the TBS of the TB, and indicates the scale factor to the terminal device by using the third indication information. The first time domain resource is a time domain resource that is allocated by the network device to the terminal device and that is used for transmitting the TB for one time in the unicast scenario. The scale factor set includes at least one scale factor, and the scale factor set is predefined in a protocol, or is configured by the network device by using higher layer signaling.

For example, correspondences between different bit values included in the third indication information and different scale factors is shown in Table 2.

**Table 2 Correspondences between different bit values and different scale factors**

| Bit value | Scale factor |
|-----------|--------------|
| 000 | 1 |
| 001 | 0.8 |
| 010 | 0.6 |
| 011 | 0.4 |
| 100 | 0.2 |
| 101 | 0.1 |

For example, if the second frequency domain resource and the first frequency domain resource do not overlap on the first time domain resource, the network device determines that the scale factor used to calculate the TBS of the TB is equal to 1.

Correspondingly, the terminal device receives the third indication information, and determines, from the scale factor set based on the third indication information, the scale factor of the TBS for transmitting the TB in the unicast scenario.

S1220: The terminal device and the network device determine the TBS based on the scale factor of the TBS.

For example, when determining the TBS based on the scale factor of the TBS, the terminal device and the network device first calculate, based on the scale factor of the TBS, a total quantity of allocated REs used to transmit the TB. The terminal device and the network device may calculate, according to formula (15), the total quantity of allocated REs used for transmitting the TB.

$$N_{RE} = \min(156, N'_{RE}) \cdot n_{PRB} \cdot \rho \quad (15)$$

$N_{RE}$ represents the total quantity of allocated REs used to transmit the TB. $\rho$ represents a scale factor. $N'_{RE}$ represents a quantity of REs that are allocated in one RB and used to transmit the TB. $n_{PRB}$ represents a quantity of RBs included in the second frequency domain resource.

Further, the terminal device and the network device calculate a quantity of information bits based on $N_{RE}$ (refer to the foregoing formula (3)), calculate a quantized intermediate value of the information bits based on the quantity of information bits (refer to the foregoing formula (4) or (5)), and finally calculate the TBS based on the quantized intermediate value of the information bits (refer to the foregoing formula (6), (7), or (8)).

For another example, when determining the TBS based on the scale factor of the TBS, the terminal device and the network device first calculate, based on the scale factor of the TBS, the quantity of bits carried on the RE used to transmit the TB. The terminal device and the network device may calculate, according to the formula (15), the quantity of bits carried on the RE used to transmit the TB.

$$N_{\inf o} = \rho \cdot N_{RE} \cdot R \cdot Q_m \cdot \upsilon \quad (16)$$

$N_{\inf o}$ represents a quantity of information bits, that is, the quantity of bits carried on the RE used to transmit the TB. R is a bit rate. $Q_m$ is a modulation order. $\upsilon$ is a quantity of transport layers. $N_{RE}$ represents a total quantity of allocated REs used to transmit the TB. For a calculation manner of $N_{RE}$, refer to the foregoing formula (2), and $\rho$ represents the scale factor.

Further, the terminal device and the network device calculate the quantized intermediate value of the information bits based on the quantity of information bits (refer to the foregoing formula (4) or (5)), and finally calculate the TBS based on the quantized intermediate value of the information bits (refer to the foregoing formula (6), (7), or (8)).

S1230: The terminal device and the network device transmit the TB based on the TBS.

In this embodiment of this application, the network device sends the third indication information to the terminal device, to indicate, to the terminal device, the scale factor of the TBS for transmitting the TB in the unicast scenario.

When the allocated second frequency domain resource used to transmit the TB and the first frequency domain resource that cannot be used to transmit the TB overlap on the first time domain resource, the TBS determined by the terminal device based on the scale factor is more appropriate, thereby improving data transmission performance.

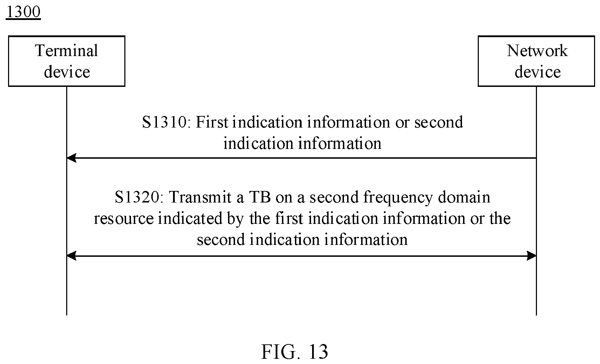

FIG. 13 is a schematic flowchart of a data transmission method 1300 according to another embodiment of this application. As shown in FIG. 13, the method 1300 may include S1310 and S1320. The following describes steps in the method 1300 in detail.

S1310: A network device sends first indication information or second indication information.

Correspondingly, a terminal device receives the first indication information or the second indication information.

The first indication information indicates a second frequency domain resource that is allocated by the network device to the terminal device and that is used to transmit a TB. The first indication information includes M bits. The M bits one-to-one correspond to M RBGs. Each of the M RBGs includes at least one frequency domain resource unit that can be used to transmit the TB. For example, each of the M RBGs includes at least one RB that can be used to transmit the TB, or each of the M RBGs includes at least one RE that can be used to transmit the TB. M is a positive integer. It should be noted that the M RBGs are some or all of N RBGs included in a current active BWP, and the N RBGs included in the current active BWP are determined based on all RBs on the current active BWP. M and N are positive integers.

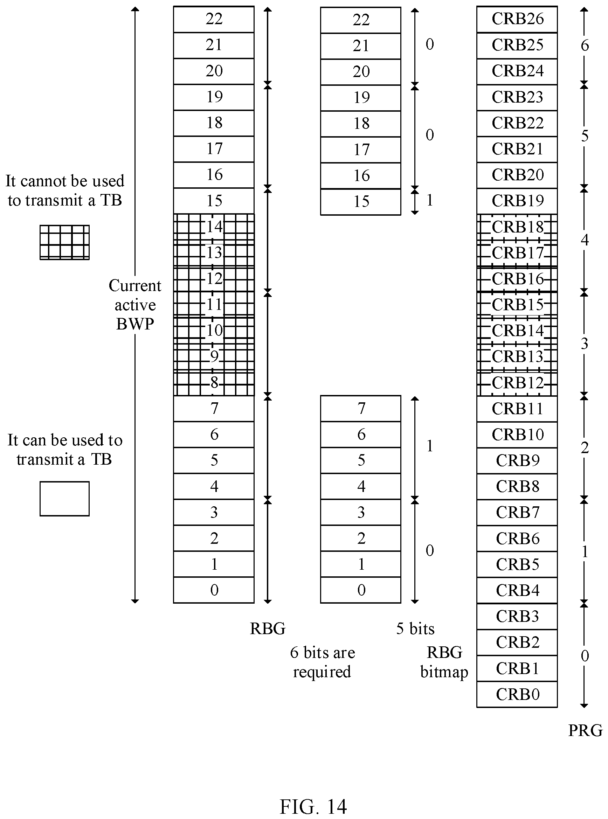

For example, as shown in FIG. 14, the current active BWP includes six RBGs (that is, an RBG 1 to an RBG 6), and the six RBGs are determined based on 23 RBs included in the current active BWP. Each of the RBG 1, the RBG 2, the RBG 4, the RBG 5, and the RBG 6 includes at least one RB that can be used to transmit the TB. When allocating, to the terminal device on the current active BWP, the second frequency domain resource used to transmit the TB, the network device may use 5 bits to indicate the second frequency domain resource allocated to the terminal device, and the 5 bits respectively correspond to the RBG 1, the RBG 2, the RBG 4, the RBG 5, and the RBG 6. For example, if the first indication information sent by the network device to the terminal device is 01100, the second frequency domain resource that is allocated by the terminal device based on the first indication information and that is used to transmit the TB includes the RBG 2 and the RBG 4.

The second indication information indicates the second frequency domain resource that is allocated by the network device to the terminal device and that is used to transmit the TB. The second indication information includes M bits. The M bits correspond to K RBGs. At least one of the M bits corresponds to at least two first RBGs. The first RBG includes a frequency domain resource unit that can be used to transmit the TB and a frequency domain resource unit that cannot be used to transmit the TB. For example, the first RBG includes an RB that can be used to transmit the TB and an RB that cannot be used to transmit the TB, or the first RBG includes an RE that can be used to transmit the TB and an RE that cannot be used to transmit the TB. It should be noted that the K RBGs are some or all of N RBGs included in a current active BWP, and the N RBGs included in the current active BWP are determined based on all RBs on the current active BWP. K is a positive integer, and K is greater than M.

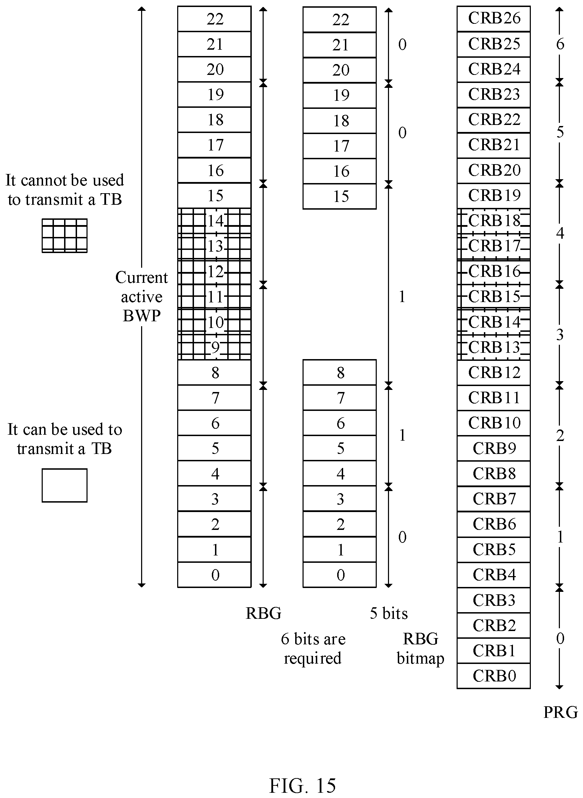

For example, as shown in FIG. 15, the current active BWP includes six RBGs (that is, an RBG 1 to an RBG 6), and the six RBGs are determined based on 23 RBs included in the current active BWP. Both the RBG 3 and the RBG 4 include the RB that can be used to transmit the TB and the RB that cannot be used to transmit the TB. When allocating, to the terminal device on the current active BWP, the second frequency domain resource used to transmit the TB, the network device may use 5 bits to indicate the second frequency domain resource allocated to the terminal device, where one bit corresponds to the RBG 3 and the RBG 4, and the remaining 4 bits respectively correspond to the RBG 1, the RBG 2, the RBG 5, and the RBG 6. For example, if the second indication information sent by the network device to the terminal device is 01100, the terminal device determines, based on the second indication information, that the allocated second frequency domain resource used to transmit the TB includes the RBG 2, the RBG 3, and the RBG 4.

Optionally, the method 1300 further includes: The network device sends configuration information #1 to the terminal device, where the configuration information #1 is used to configure an indication manner of the second frequency domain resource for the terminal device. The indication manner of the second frequency domain resource includes: indicating the second frequency domain resource by using first indication information, or indicating the second frequency domain resource by using second indication information, or indicating the second frequency domain resource by using sixth indication information. The sixth indication information includes N bits, and the N bits one-to-one correspond to the N RBGs included in the current active BWP.

It should be noted that if the first frequency domain resource cannot be used to transmit the TB on each time domain resource that can be used to transmit the TB, the network device may indicate the second frequency domain resource to the terminal device by using the first indication information or the second indication information. For example, the second frequency domain resource is a downlink frequency domain resource. If the first frequency domain resource cannot be used for uplink transmission in each downlink slot, the network device may indicate the second frequency domain resource to the terminal device by using the first indication information or the second indication information. The first frequency domain resource is a frequency domain resource that cannot be used to transmit the TB.

Optionally, if the second frequency domain resource and the first frequency domain resource overlap on the first time domain resource, the terminal device and the network device determine the TBS of the TB according to the method 600, the method 1100, or the method 1200.

S1320: The terminal device and the network device transmit the TB on the second frequency domain resource indicated by the first indication information or the second indication information.

In this embodiment of this application, the M bits included in the first indication information correspond to the M RBGs, and each of the M RBGs includes at least one frequency domain resource unit that can be used to transmit the TB. When the current active BWP includes at least one RBG that does not include a frequency domain resource unit that can be used to transmit the TB, a quantity of bits of the first indication information can be reduced.

Alternatively, the M bits included in the second indication information correspond to the K RBGs, and at least one of the M bits corresponds to the at least two first RBGs. A quantity of bits of the second indication information can be reduced in comparison with a manner in which one bit corresponds to one RBG.

In addition, in this embodiment of this application, the N RBGs included in the current active BWP are determined based on all the RBs on the current active BWP. Therefore, it can be ensured that division of the RBGs and the PRGs remains unchanged, and data transmission performance is not affected, especially multiple-input multiple-output (multiple input multiple output, MIMO) performance is not affected.

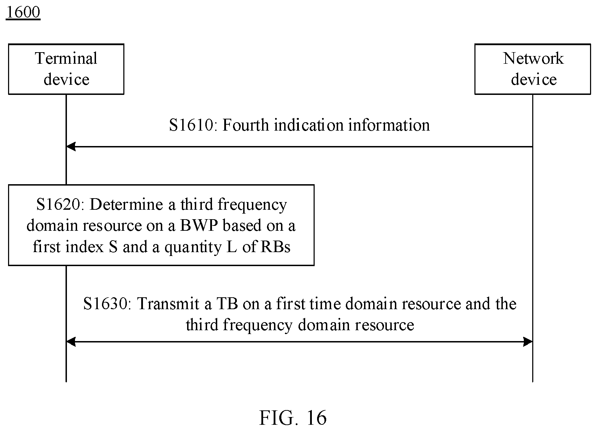

FIG. 16 is a schematic flowchart of a data transmission method 1600 according to another embodiment of this application. As shown in FIG. 16, the method 1600 may include S1610 to S1630. The following describes steps in the method 1600 in detail.

S1610: A network device sends fourth indication information.

Correspondingly, a terminal device receives the fourth indication information.

The fourth indication information includes a first index S and a quantity L of consecutive RBs that can be used to transmit a TB, and the first index S indicates an $(S+1)^{th}$ RB in the RBs that can be used to transmit the TB and that are on a current active BWP. The current active BWP includes an RB that can be used to transmit the TB and an RB that cannot be used to transmit the TB.

It should be noted that, in this embodiment of this application, an example in which an index value starts from 0 is used. In other words, when the index value starts from 0, the first index S indicates the $(S+1)^{th}$ RB in the RBs that can be used to transmit the TB and that are on the current active BWP. If the index value starts from 1, the first index S indicates an $S^{th}$ RB in the RBs that can be used to transmit the TB and that are on the current active BWP

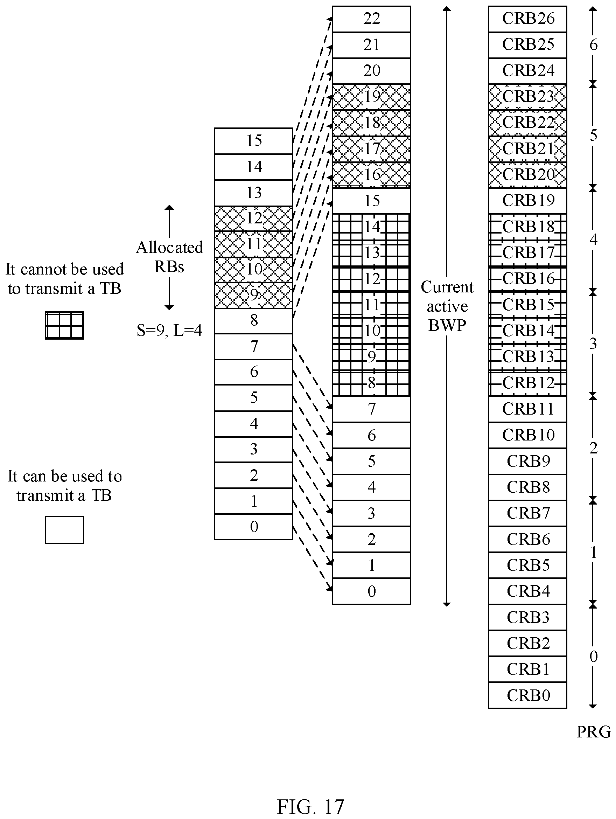

For example, as shown in FIG. 17, when the first index S included in the fourth indication information is equal to 9, the first index S indicates a tenth RB in the RBs that can be used to transmit the TB and that are on the current active BWP. On the current active BWP shown in FIG. 17, an RB 0 to an RB 7 and an RB 15 to an RB 22 are RBs that can be used to transmit the TB, and the tenth RB in the RB 0 to the RB 7 and the RB 15 to the RB 22 is an RB 16. In other words, the first index S actually indicates the RB 16 on the current active BWP.

It should be noted that during interleaving (that is, VRBs are not in a one-to-one mapping to PRBs), the first index S indicates an $(S+1)^{th}$ VRB in VRBs that are in VRBs before interleaving and that can be used to transmit the TB.

For example, as shown in FIG. 18, when the first index S included in the fourth indication information is equal to 1, the first index S indicates the second VRB in the VRBs that can be used to transmit the TB and that are in the VRBs before interleaving. In other words, the first index S actually indicates a VRB 5.

S1620: The terminal device determines a third frequency domain resource on the BWP based on the first index S and the quantity L of RBs.

The third frequency domain resource includes L RBs that can be used to transmit the TB. It may be understood that, when the first index S indicates the $(S+1)^{th}$ RB in the RBs that can be used to transmit the TB on the current active BWP, the L RBs included in the third frequency domain resource are $(S+1)^{th}$ to $(S+L)^{th}$ RBs in the RBs that can be used to transmit the TB and that are on the current active BWP.

For example, as shown in FIG. 17, if the first index S included in the fourth indication information is equal to 9 and L=4, the third frequency domain resource includes tenth to thirteenth RBs of RBs that can be used to transmit the TB and that are on the current active BWP. The tenth RB to the thirteenth RB in the RBs that can be used to transmit the TB and that are on the current active BWP shown in FIG. 17 are the RB 16 to the RB 19. In other words, the first index S and L included in the fourth indication information actually indicate the RB 16 to the RB 19 on the current active BWP.

It should be noted that during interleaving (that is, the VRBs are not in a one-to-one mapping to the PRBs), the first index S indicates an $(S+1)^{th}$ VRB in VRBs that are in the VRBs before interleaving and that can be used to transmit the TB. The L RBs included in the third frequency domain resource are $(S+1)^{th}$ to $(S+L)^{th}$ VRBs in VRBs that are in the VRBs before interleaving and that can be used to transmit the TB.

For example, as shown in FIG. 18, if the first index S included in the fourth indication information is equal to 1 and L=4, the third frequency domain resource includes the second to the fifth in VRBs that are in the VRBs before interleaving and that can be used to transmit the TB. The second to the fifth VRBs in the VRBs that are in the VRBs before interleaving and that can be used to transmit the TB shown in FIG. 18 are a VRB 5 to a VRB 8. In other words, the first index S and L included in the fourth indication information actually indicate the VRB 5 to the VRB 8 in the VRBs before interleaving.

Further, the terminal device may map the VRB included in the third frequency domain resource to the PRB based on the mapping relationship between the VRB and the PRB. For example, as shown in FIG. 18, the terminal device determines, based on the mapping relationship between the VRB and the PRB, that the third frequency domain resource includes a PRB 1 to a PRB 4 on the current active BWP.

Optionally, in S 1620, that the terminal device determines a third frequency domain resource on the BWP based on the first index S and the quantity L of RBs includes: The terminal device determines the third frequency domain resource based on a second index S' and the L. The second index S' is determined based on the first index S and a relationship between the first index and the second index, and the second index S' indicates an $(S'+1)^{th}$ RB in all the RBs on the current active BWP.

A representation form of a relationship between the first index and the second index is not limited in this embodiment of this application. For example, the first index and the second index are in a one-to-one mapping relationship. As shown in FIG. 17, 16 values (0 to 15) of the first index one-to-one correspond to 16 values (0 to 7 and 15 to 22) of 23 values of the second index. For another example, the relationship between the first index and the second index may be represented by S'=S+Z. As shown in FIG. 17, when the value of the first index is less than or equal to a threshold, for example, 7, a relationship between the first index and the second index is: S'=S, that is, Z=0. When the value of the first index is greater than 7, a relationship between the first index and the second index is: S'=S+7, that is, Z=7. The threshold is equal to an index of a starting RB of the first frequency domain resource minus 1. The first frequency domain resource is a frequency domain resource that cannot be used to transmit the TB.

When the terminal device determines the third frequency domain resource based on the second index S' and the L, the L RBs included in the third frequency domain resource are the $(S'+1)^{th}$ RB on the current active BWP and L-1 RBs that can be used to transmit the TB and that are after the $(S'+1)^{th}$ RB. For example, as shown in FIG. 17, when S=9, the terminal device determines S'=16 based on the relationship between S and S'. Further, the terminal device determines that the third frequency domain resource includes a seventeenth RB (that is, the RB 16) on the current active BWP and three RBs (that is, the RB 17 to the RB 19) that can be used to transmit the TB and that are after the RB 16.

It should be noted that during interleaving (that is, VRBs are not in a one-to-one mapping to PRBs), the second index S' indicates an $(S'+1)^{th}$ VRB in all VRBs in the VRBs before interleaving. For example, as shown in FIG. 18, when S=1, the terminal device determines S'=5 based on a relationship between S and S', where S' indicates a sixth VRB (that is, the VRB 6) in the VRBs before interleaving. The L RBs included in the third frequency domain resource are the $(S'+1)^{th}$ VRB in the VRBs before interleaving and L-1 VRBs that can be used to transmit the TB and that are after the $(S'+1)^{th}$ VRB. For example, as shown in FIG. 18, the third frequency domain resource includes a sixth VRB (that is, the VRB 5) in the VRBs before interleaving and three VRBs (that is, the VRB 6 to the VRB 8) that are after the VRB 5 and that can be used to transmit the TB.

Optionally, before S1620, the method 1600 further includes: The network device sends fifth indication information to the terminal device, where the fifth indication information indicates the relationship between the first index and the second index. The fifth indication information may be carried in higher layer signaling, for example, an RRC message or a MAC CE, or may be carried in physical layer signaling, for example, DCI.

Optionally, the method 1300 further includes: The network device sends the configuration information #1 to the terminal device, where the configuration information #1 is used to configure an indication manner of the third frequency domain resource for the terminal device. An indication manner of the third frequency domain resource includes: indicating the third frequency domain resource by using fourth indication information, or indicating the third frequency domain resource by using seventh indication information. The seventh indication information includes the second index S' and the quantity L of consecutive RBs. The second index S' indicates the $(S'+1)^{th}$ RB in all the RBs included in the current active BWP.

It should be noted that if the first frequency domain resource cannot be used to transmit the TB on each time domain resource that can be used to transmit the TB, the network device may indicate the third frequency domain resource to the terminal device by using the fourth indication information. For example, the third frequency domain resource is a downlink frequency domain resource. If the first frequency domain resource cannot be used for uplink transmission in each downlink slot, the network device may indicate the third frequency domain resource to the terminal device by using the fourth indication information.

S1630: The terminal device and the network device transmit the TB on the first time domain resource and the third frequency domain resource.

The first time domain resource is a time domain resource that is allocated by the network device to the terminal device and that is used to transmit the TB.

In this embodiment of this application, when the current active BWP includes the RB that can be used to transmit the TB and the RB that cannot be used to transmit the TB, the first index included in the fourth indication information indicates the RB that can be used to transmit the TB on the current active BWP, instead of all RBs on the current active BWP, so that a quantity of bits of the fourth indication information can be reduced.

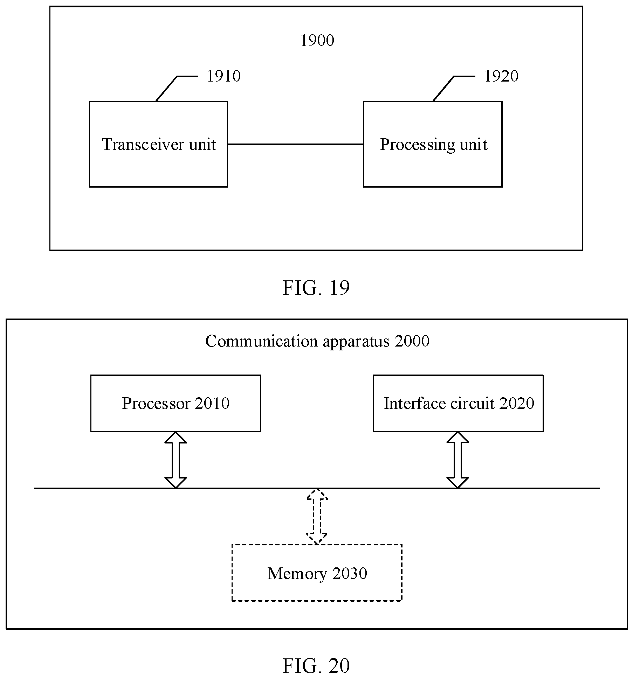

FIG. 19 and FIG. 20 each are a schematic diagram of a structure of a possible communication apparatus according to an embodiment of this application. The communication apparatuses may implement the functions of the terminal device or the network device in the foregoing method embodiments. Therefore, beneficial effect of the foregoing method embodiments can also be implemented. In embodiments of this application, the communication apparatuses may be the terminal device 130 or 140 shown in FIG. 1, may be the access network device 120 shown in FIG. 1, or may be a module (for example, a chip) applied to the terminal device or the access network device.

FIG. 19 is a schematic diagram of a structure of a communication apparatus 1900 according to an embodiment of this application. The apparatus 1900 may include a transceiver unit 1910 and a processing unit 1920.

When the communication apparatus 1900 is configured to implement the functions of the terminal device or the network device in the method embodiment in FIG. 6, the transceiver unit 1910 is configured to obtain a first frequency domain resource on a first time domain resource. The processing unit 1920 is configured to determine a TBS based on a frequency domain resource that is in the second frequency domain resource on the first time domain resource and that does not overlap the first frequency domain resource. The transceiver unit 1910 is further configured to transmit a TB on the first time domain resource and the non-overlapping frequency domain resource based on the TBS.

When the communication apparatus 1900 is configured to implement the functions of the terminal device in the method embodiment in FIG. 11, the transceiver unit 1910 is configured to receive DCI. The processing unit 1920 is configured to determine, based on the DCI, overheads used for calculating the TBS. The processing unit 1920 is further configured to determine the TBS based on the overheads used for calculating the TBS. The transceiver unit 1910 is further configured to transmit the TB based on the TBS.

When the communication apparatus 1000 is configured to implement the functions of the network device in the method embodiment in FIG. 11, the transceiver unit 1910 is configured to send the DCI. The processing unit 1920 is configured to determine the TBS based on the overheads used for calculating the TBS. The transceiver unit 1910 is further configured to transmit the TB based on the TBS.

When the communication apparatus 1000 is configured to implement the function of the terminal device in the method embodiment in FIG. 12, the transceiver unit 1910 is configured to receive third indication information, where the third indication information indicates a scale factor of a TBS in a unicast scenario. The processing unit 1920 is configured to determine the TBS based on the scale factor of the TBS. The transceiver unit 1910 is further configured to transmit the TB based on the TBS.

When the communication apparatus 1000 is configured to implement the function of the network device in the method embodiment in FIG. 12, the transceiver unit 1910 is configured to send third indication information, where the third indication information indicates a scale factor of the TBS in a unicast scenario. The processing unit 1920 is configured to determine the TBS based on the scale factor of the TBS. The transceiver unit 1910 is further configured to transmit the TB based on the TBS.

When the communication apparatus 1000 is configured to implement the function of the terminal device in the method embodiment in FIG. 13, the transceiver unit 1910 is configured to receive first indication information or second indication information, where the first indication information or the second indication information indicates a second frequency domain resource that is allocated by the network device to the terminal device and that is used to transmit a TB. The transceiver unit 1910 is further configured to transmit the TB on the second frequency domain resource indicated by the first indication information or the second indication information.

When the communication apparatus 1000 is configured to implement the function of the network device in the method embodiment in FIG. 13, the transceiver unit 1910 is configured to send first indication information or second indication information, where the first indication information or the second indication information indicates a second frequency domain resource that is allocated by the network device to the terminal device and that is used to transmit a TB. The transceiver unit 1910 is further configured to transmit the TB on the second frequency domain resource indicated by the first indication information or the second indication information.

When the communication apparatus 1000 is configured to implement the function of the terminal device in the method embodiment in FIG. 16, the transceiver unit 1910 is configured to receive fourth indication information, where the fourth indication information indicates a first index S and a quantity L of consecutive RBs that can be used to transmit a TB, and the first index S indicates an $(S+1)^{th}$ RB in the RBs that can be used to transmit the TB on a current active BWP. The processing unit 1920 is configured to determine a second frequency domain resource based on the first index S and the quantity L of RBs. The transceiver unit 1910 is further configured to transmit the TB on the first time domain resource and the second frequency domain resource.

When the communication apparatus 1000 is configured to implement the function of the network device in the method embodiment in FIG. 16, the transceiver unit 1910 is configured to send fourth indication information, where the fourth indication information indicates a first index S and a quantity L of consecutive RBs that can be used to transmit a TB, and the first index S indicates an $(S+1)^{th}$ RB in RBs that can be used to transmit the TB on a current active BWP. The transceiver unit 1910 is further configured to transmit the TB on the first time domain resource and the second frequency domain resource.

For more detailed descriptions of the transceiver unit 1910 and the processing unit 1920, refer to related descriptions in the foregoing method embodiments. Details are not described herein again.

As shown in FIG. 20, a communication apparatus 2000 includes a processor 2010 and an interface circuit 2020. The processor 2010 and the interface circuit 2020 are coupled to each other. It can be understood that the interface circuit 2020 may be a transceiver or an input/output interface. Optionally, the communication apparatus 2000 may further include a memory 2030, configured to store instructions to be executed by the processor 2010, store input data required for executing the instructions by the processor 2010, or store data generated after the processor 2010 executes the instructions.

When the communication apparatus 2000 is configured to implement the method in the foregoing method embodiment, the processor 2010 is configured to perform a function of the processing unit 1920, and the interface circuit 2020 is configured to perform a function of the transceiver unit 1910.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk drive, or a magnetic tape, may be an optical medium, for example, a digital versatile disc (digital versatile disc, DVD), or may be a semiconductor medium, for example, a solid state disk (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data transmission method, comprising:

   obtaining, by a first device, a first frequency domain resource on a first time domain resource, wherein the first frequency domain resource is a frequency domain resource that cannot be used to transmit a transport block TB; determining, by the first device, a transport block size TBS based on a frequency domain resource that is in a second frequency domain resource on the first time domain resource and that does not overlap the first frequency domain resource, wherein the second frequency domain resource is a frequency domain resource that is indicated by downlink control information and that is used to transmit the TB; and transmitting, by the first device, the TB on the first time domain resource and the non-overlapping frequency domain resource based on the TBS.

2. The method according to claim 1, wherein the determining, by the first device, a TBS based on a frequency domain resource that is in a second frequency domain resource on the first time domain resource and that does not overlap the first frequency domain resource comprises: determining, by the first device, the TBS based on a quantity of frequency domain resource units comprised in the non-overlapping frequency domain resource.

3. The method according to claim 2, wherein the determining, by the first device, the TBS based on a quantity of frequency domain resource units comprised in the non-overlapping frequency domain resource comprises: determining, by the first device, the TBS based on a ratio of the quantity of frequency domain resource units comprised in the non-overlapping frequency domain resource to a quantity of frequency domain resource units comprised in the second frequency domain resource.

4. The method according to any one of claims 1 to 3, wherein the first time domain resource is one of a plurality of time domain resources, and the first frequency domain resource on the first time domain resource cannot be used to transmit the TB; and the transmitting, by the first device, the TB based on the TBS comprises: repeatedly transmitting, by the first device, the TB on the plurality of time domain resources based on the TBS.

5. The method according to any one of claims 1 to 4, wherein the first device is a terminal device, and the method further comprises: receiving, by the first device, first indication information, wherein the first indication information indicates the second frequency domain resource, the first indication information comprises M bits, the M bits one-to-one correspond to M resource block groups RBGs, each of the M RBGs comprises at least one frequency domain resource unit that can be used to transmit the TB, and M is a positive integer.

6. The method according to any one of claims 1 to 4, wherein the first device is a network device, and the method further comprises: sending, by the first device, first indication information, wherein the first indication information indicates the second frequency domain resource, the first indication information comprises M bits, the M bits one-to-one correspond to M RBGs, each of the M RBGs comprises at least one frequency domain resource unit that can be used to transmit the TB, and M is a positive integer.

7. The method according to any one of claims 1 to 4, wherein the first device is a terminal device, and the method further comprises: receiving, by the first device, second indication information, wherein the second indication information indicates the second frequency domain resource, the second indication information comprises M bits, the M bits correspond to K RBGs, at least one of the M bits corresponds to at least two first RBGs, the first RBG comprises a frequency domain resource unit that can be used to transmit the TB and a frequency domain resource unit that cannot be used to transmit the TB, and M and K are positive integers.

8. The method according to any one of claims 1 to 4, wherein the first device is a network device, and the method further comprises:
sending, by the first device, second indication information, wherein the second indication information indicates the second frequency domain resource, the second indication information comprises M bits, the M bits correspond to K RBGs, at least one of the M bits corresponds to at least two first RBGs, the first RBG comprises a frequency domain resource unit that can be used to transmit the TB and a frequency domain resource unit that cannot be used to transmit the TB, and M and K are positive integers.

9. The method according to any one of claims 5 to 8, wherein an RBG comprised in a current active bandwidth part BWP is determined based on all RBs on the current active BWP.

10. A communication apparatus, comprising a transceiver unit and a processing unit, wherein

the transceiver unit is configured to obtain a first frequency domain resource on a first time domain resource, wherein the first frequency domain resource is a frequency domain resource that cannot be used to transmit a transport block TB;
the processing unit is configured to determine a transport block size TBS based on a frequency domain resource that is in a second frequency domain resource on the first time domain resource and that does not overlap the first frequency domain resource, wherein the second frequency domain resource is a frequency domain resource that is indicated by downlink control information and that is used to transmit the TB; and
the transceiver unit is further configured to transmit the TB on the first time domain resource and the non-overlapping frequency domain resource based on the TBS.

11. The apparatus according to claim 10, wherein the processing unit is specifically configured to determine the TBS based on a quantity of frequency domain resource units comprised in the non-overlapping frequency domain resource.

12. The apparatus according to claim 11, wherein the processing unit is specifically configured to determine the TBS based on a ratio of the quantity of frequency domain resource units comprised in the non-overlapping frequency domain resource to a quantity of frequency domain resource units comprised in the second frequency domain resource.

13. The apparatus according to any one of claims 10 to 12, wherein the first time domain resource is one of a plurality of time domain resources, and the first frequency domain resource on the first time domain resource cannot be used to transmit the TB; and
the transceiver unit of the first device is specifically configured to repeatedly transmit the TB on the plurality of time domain resources based on the TBS.

14. The apparatus according to any one of claims 10 to 13, wherein the transceiver unit is further configured to receive first indication information, the first indication information indicates the second frequency domain resource, the first indication information comprises M bits, the M bits one-to-one correspond to M resource block groups RBG, each of the M RBGs comprises at least one frequency domain resource unit that can be used to transmit the TB, and M is a positive integer.

15. The apparatus according to any one of claims 10 to 13, wherein the transceiver unit is further configured to send first indication information, the first indication information indicates the second frequency domain resource, the first indication information comprises M bits, the M bits one-to-one correspond to M RBGs, each of the M RBGs comprises at least one frequency domain resource unit that can be used to transmit the TB, and M is a positive integer.

16. The apparatus according to any one of claims 10 to 13, wherein the transceiver unit is further configured to receive second indication information, the second indication information indicates the second frequency domain resource, the second indication information comprises M bits, the M bits correspond to K RBGs, at least one of the M bits corresponds to at least two first RBGs, the first RBG comprises a frequency domain resource unit that can be used to transmit the TB and a frequency domain resource unit that cannot be used to transmit the TB, and M and K are positive integers.

17. The apparatus according to any one of claims 10 to 13, wherein the transceiver unit is further configured to send second indication information, the second indication information indicates the second frequency domain resource, the second indication information comprises M bits, the M bits correspond to K RBGs, at least one of the M bits corresponds to at least two first RBGs, the first RBG comprises a frequency domain resource unit that can be used to transmit the TB and a frequency domain resource unit that cannot be used to transmit the TB, and M and K are positive integers.

18. The apparatus according to any one of claims 14 to 17, wherein an RBG comprised in a current active bandwidth part BWP is determined based on all RBs on the current active BWP.

19. A computer-readable storage medium, wherein the computer-readable storage medium stores a computer program, and when the computer program is run, the method according to any one of claims 1 to 9 is implemented.

Core network
device 110

Radio access network
device 120

Terminal
device 130

Terminal
device 140

FIG. 1

| VRB | RBG | | RBG |
|---|---|---|---|
| | | CRB25 | |
| | | CRB24 | RBG 6 |
| 22 | | CRB25 | |
| 21 | | CRB24 | |
| 20 | | CRB23 | |
| 19 | | CRB22 | RBG 5 |
| 18 | | CRB21 | |
| 17 | | CRB20 | |
| 16 | | CRB19 | |
| 15 | | CRB18 | RBG 4 |
| 14 | | CRB17 | |
| 13 | | CRB16 | |
| 12 | | CRB15 | |
| 11 | | CRB14 | RBG 3 |
| 10 | | CRB13 | |
| 9 | | CRB12 | |
| 8 | | CRB11 | |
| 7 | | CRB10 | RBG 2 |
| 6 | | CRB9 | |
| 5 | | CRB8 | |
| 4 | | CRB7 | |
| 3 | | CRB6 | RBG 1 |
| 2 | | CRB5 | |
| 1 | | CRB4 | |
| 0 | | CRB3 | |
| | | CRB2 | RBG 0 |
| | | CRB1 | |
| | | CRB0 | |

BWP

FIG. 2

| | CRB25 |
|---|---|
| | CRB24 |
| 22 | CRB25 |
| 21 | CRB24 |
| 20 | CRB23 |
| 19 | CRB22 |
| 18 | CRB21 |
| 17 | CRB20 |
| 16 | CRB19 |
| 15 | CRB18 |
| 14 | CRB17 |
| 13 | CRB16 |
| 12 | CRB15 |
| 11 | CRB14 |
| 10 | CRB13 |
| 9 | CRB12 |
| 8 | CRB11 |
| 7 | CRB10 |
| 6 | CRB9 |
| 5 | CRB8 |
| 4 | CRB7 |
| 3 | CRB6 |
| 2 | CRB5 |
| 1 | CRB4 |
| 0 | CRB3 |
| | CRB2 |
| | CRB1 |
| | CRB0 |

BWP

$L_{RB}$

$RB_{Start}$

VRB

FIG. 3

Rate match resource

FIG. 4

D: Downlink resource
U: Uplink resource
F: Flexible resource

(a)

(b)

(c)

FIG. 5

<u>600</u>

| Terminal device | | Network device |

S610: Obtain a first frequency domain resource on a first time domain resource

S620: Determine a TBS based on a frequency domain resource that is in a second frequency domain resource on the first time domain resource and that does not overlap the first frequency domain resource

S630: Transmit, based on the TBS, a TB on the first time domain resource and the frequency domain resource that does not overlap the first frequency domain resource and that is in the second frequency domain resource on the first time domain resource

FIG. 6

FIG. 7

It can be used to transmit a PDSCH

It cannot be used to transmit a PDSCH

First time domain resource

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |

RBs indicated by DCI
(RBs allocated to a PDSCH)

FIG. 8

FIG. 9

FIG. 10

1100

```
┌──────────┐                                           ┌──────────┐
│ Terminal │                                           │ Network  │
│  device  │                                           │  device  │
└────┬─────┘                                           └────┬─────┘
     │                                                      │
     │              S1110: DCI                              │
     │◄─────────────────────────────────────────────────────
     │                                                      │
┌────┴──────────────────────────┐                          │
│ S1120: Determine, based on the│                          │
│  DCI, overheads used by a TB  │                          │
└────┬──────────────────────────┘                          │
     │                                                      │
┌────┴──────────────────────────────────────────────────────┐
│ S1130: Determine a TBS based on the overheads used by the TB│
└────┬──────────────────────────────────────────────────────┘
     │                                                      │
     │        S1140: Transmit the TB based on the TBS        │
     │◄────────────────────────────────────────────────────►│
     │                                                      │
```

FIG. 11

1200

```
┌──────────┐                                           ┌──────────┐
│ Terminal │                                           │ Network  │
│  device  │                                           │  device  │
└────┬─────┘                                           └────┬─────┘
     │                                                      │
     │        S1210: Third indication information           │
     │◄─────────────────────────────────────────────────────
     │                                                      │
┌────┴──────────────────────────────────────────────────────┐
│ S1220: Determine a TBS based on a scale factor of the TBS  │
└────┬──────────────────────────────────────────────────────┘
     │                                                      │
     │         S1230: Transmit a TB based on the TBS         │
     │◄────────────────────────────────────────────────────►│
     │                                                      │
```

FIG. 12

1300

```
┌──────────┐                                    ┌──────────┐
│ Terminal │                                    │ Network  │
│  device  │                                    │  device  │
└──────────┘                                    └──────────┘
      │                                               │
      │   S1310: First indication information or second│
      │              indication information            │
      │◄──────────────────────────────────────────────│
      │                                               │
      │   S1320: Transmit a TB on a second frequency domain
      │   resource indicated by the first indication information or the
      │            second indication information       │
      │◄─────────────────────────────────────────────►│
      │                                               │
```

FIG. 13

It cannot be used
to transmit a TB

Current
active
BWP

It can be used to
transmit a TB

| 22 |
| 21 |
| 20 |
| 19 |
| 18 |
| 17 |
| 16 |
| 15 |
| 14 |
| 13 |
| 12 |
| 11 |
| 10 |
| 9 |
| 8 |
| 7 |
| 6 |
| 5 |
| 4 |
| 3 |
| 2 |
| 1 |
| 0 |

RBG

| 22 |
| 21 |
| 20 |
| 19 |
| 18 |
| 17 |
| 16 |
| 15 |

0

0

1

| 7 |
| 6 |
| 5 |
| 4 |
| 3 |
| 2 |
| 1 |
| 0 |

1

0

5 bits

6 bits are
required

RBG
bitmap

| CRB26 |
| CRB25 |
| CRB24 |
| CRB23 |
| CRB22 |
| CRB21 |
| CRB20 |
| CRB19 |
| CRB18 |
| CRB17 |
| CRB16 |
| CRB15 |
| CRB14 |
| CRB13 |
| CRB12 |
| CRB11 |
| CRB10 |
| CRB9 |
| CRB8 |
| CRB7 |
| CRB6 |
| CRB5 |
| CRB4 |
| CRB3 |
| CRB2 |
| CRB1 |
| CRB0 |

6

5

4

3

2

1

0

PRG

FIG. 14

It cannot be used
to transmit a TB

It can be used to
transmit a TB

Current
active
BWP

| 22 |
| 21 |
| 20 |
| 19 |
| 18 |
| 17 |
| 16 |
| 15 |
| 14 |
| 13 |
| 12 |
| 11 |
| 10 |
| 9 |
| 8 |
| 7 |
| 6 |
| 5 |
| 4 |
| 3 |
| 2 |
| 1 |
| 0 |

RBG

| 22 |
| 21 | 0
| 20 |
| 19 |
| 18 | 0
| 17 |
| 16 |
| 15 |

| 8 |
| 7 |
| 6 | 1
| 5 |
| 4 |
| 3 |
| 2 | 0
| 1 |
| 0 |

1

5 bits

6 bits are
required

RBG
bitmap

| CRB26 | 6
| CRB25 |
| CRB24 |
| CRB23 |
| CRB22 | 5
| CRB21 |
| CRB20 |
| CRB19 |
| CRB18 | 4
| CRB17 |
| CRB16 |
| CRB15 |
| CRB14 | 3
| CRB13 |
| CRB12 |
| CRB11 |
| CRB10 | 2
| CRB9 |
| CRB8 |
| CRB7 |
| CRB6 | 1
| CRB5 |
| CRB4 |
| CRB3 |
| CRB2 | 0
| CRB1 |
| CRB0 |

PRG

FIG. 15

1600

```
┌──────────┐                                    ┌──────────┐
│ Terminal │                                    │ Network  │
│  device  │                                    │  device  │
└────┬─────┘                                    └────┬─────┘
     │                                               │
     │     S1610: Fourth indication information      │
     │◄──────────────────────────────────────────────│
     │                                               │
┌────┴───────────────────────────────┐              │
│ S1620: Determine a third frequency  │              │
│ domain resource on a BWP based on a │              │
│ first index S and a quantity L of RBs│             │
└────┬───────────────────────────────┘              │
     │                                               │
     │  S1630: Transmit a TB on a first time domain  │
     │       resource and the third frequency        │
     │                domain resource                │
     │◄─────────────────────────────────────────────►│
     │                                               │
```

FIG. 16

It cannot be used
to transmit a TB

It can be used to
transmit a TB

Allocated
RBs

S=9, L=4

Current
active
BWP

PRG

FIG. 17

FIG. 18

1900

1910

1920

| Transceiver unit | Processing unit |

FIG. 19

Communication apparatus 2000

Processor 2010

Interface circuit 2020

Memory 2030

FIG. 20

## INTERNATIONAL SEARCH REPORT

International application No.

**PCT/CN2022/116267**

| A. | CLASSIFICATION OF SUBJECT MATTER |
|---|---|

H04W 72/04(2009.01)i; H04W 72/12(2009.01)i

According to International Patent Classification (IPC) or to both national classification and IPC

| B. | FIELDS SEARCHED |
|---|---|

Minimum documentation searched (classification system followed by classification symbols)

H04W 72/-

Documentation searched other than minimum documentation to the extent that such documents are included in the fields searched

Electronic data base consulted during the international search (name of data base and, where practicable, search terms used)

CNABS, CNTXT, CNKI: 频域, 资源块组, RBG, PRG, 下行控制信息, 下行链路控制信息, DCI, 传输块, TB, 重叠; WPABS, VEN, USTXT, EPTXT, WOTXT, 3GPP: frequency, RBG, resource block group, PRG, DCI, downlink control information, TB, TBS, TB Size, transport block, overlap

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021028420 A1 (PANASONIC INTELLECTUAL PROPERTY CORP. OF AMERICA) 18 February 2021 (2021-02-18) description, page 16, line 3-page 21, line 9, page 29, line 26-page 30, line 19, and figure 12 | 1-19 |
| Y | 3GPP. ""Correction to NR MAC test case 7.1.1.4.2.3"" *3GPP TSG-RAN5 Meeting #92-e R5-214588*, 07 August 2021 (2021-08-07), pp. 9-13 | 1-19 |
| A | CN 110034864 A (HUAWEI TECHNOLOGIES CO., LTD.) 19 July 2019 (2019-07-19) entire document | 1-19 |
| A | CN 109995497 A (HUAWEI TECHNOLOGIES CO., LTD.) 09 July 2019 (2019-07-09) entire document | 1-19 |
| A | CN 113170455 A (GUANGDONG OPPO MOBILE COMMUNICATIONS CO., LTD.) 23 July 2021 (2021-07-23) entire document | 1-19 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2022** | **23 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/116267** |

**C.    DOCUMENTS CONSIDERED TO BE RELEVANT**

| Category* | Citation of document, with indication, where appropriate, of the relevant passages | Relevant to claim No. |
|---|---|---|
| A | ERICSSON. ""Summary of 7.3.3.1 (resource allocation)""<br>*TSG-RAN WG1 AdHoc 1801 R1-1801011,* 24 January 2018 (2018-01-24),<br>    entire document | 1-19 |

Form PCT/ISA/210 (second sheet) (January 2015)

INTERNATIONAL SEARCH REPORT
Information on patent family members

International application No.

**PCT/CN2022/116267**

| Patent document cited in search report | | | Publication date (day/month/year) | Patent family member(s) | | | Publication date (day/month/year) |
|---|---|---|---|---|---|---|---|
| WO | 2021028420 | A1 | 18 February 2021 | US | 2022132506 | A1 | 28 April 2022 |
| | | | | EP | 4014620 | A1 | 22 June 2022 |
| | | | | EP | 3780806 | A1 | 17 February 2021 |
| | | | | CN | 114009127 | A | 01 February 2022 |
| | | | | IN | 202247007105 | A | 11 March 2022 |
| CN | 110034864 | A | 19 July 2019 | US | 2020344031 | A1 | 29 October 2020 |
| | | | | WO | 2019137500 | A1 | 18 July 2019 |
| | | | | EP | 3716514 | A1 | 30 September 2020 |
| | | | | CN | 110034864 | B | 15 January 2021 |
| | | | | EP | 3716514 | A4 | 20 January 2021 |
| CN | 109995497 | A | 09 July 2019 | WO | 2019158005 | A1 | 22 August 2019 |
| | | | | EP | 3709740 | A1 | 16 September 2020 |
| | | | | CN | 110166209 | A | 23 August 2019 |
| | | | | BR | 112020016565 | A2 | 22 December 2020 |
| | | | | JP | 2022106776 | A | 20 July 2022 |
| | | | | JP | 2021507650 | A | 22 February 2021 |
| | | | | US | 2020296758 | A1 | 17 September 2020 |
| | | | | IN | 202037021150 | A | 07 August 2020 |
| CN | 113170455 | A | 23 July 2021 | WO | 2021003620 | A1 | 14 January 2021 |
| | | | | CN | 113490278 | A | 08 October 2021 |
| | | | | EP | 3958627 | A1 | 23 February 2022 |
| | | | | US | 2022078772 | A1 | 10 March 2022 |
| | | | | EP | 3958627 | A4 | 18 May 2022 |

Form PCT/ISA/210 (patent family annex) (January 2015)

## REFERENCES CITED IN THE DESCRIPTION

**Patent documents cited in the description**

- CN 202111033122